(19) Europäisches Patentamt

European Patent Office

Office européen des brevets

(11) **EP 2 226 710 A2**

(12) **EUROPEAN PATENT APPLICATION**

(43) Date of publication:
**08.09.2010 Bulletin 2010/36**

(51) Int Cl.:
***G06F 3/042*** (2006.01)

(21) Application number: **10002083.3**

(22) Date of filing: **01.03.2010**

(84) Designated Contracting States:
**AT BE BG CH CY CZ DE DK EE ES FI FR GB GR HR HU IE IS IT LI LT LU LV MC MK MT NL NO PL PT RO SE SI SK SM TR**
Designated Extension States:
**AL BA ME RS**

(30) Priority: **06.03.2009 JP 2009054235**

(71) Applicant: **Sharp Kabushiki Kaisha**
**Osaka-shi, Osaka 545-8522 (JP)**

(72) Inventors:
• **Yoshimoto, Yosiharu**
  **Osaka-shi**
  **Osaka 545-8522 (JP)**

• **Yamashita, Daisuke**
  **Osaka-shi**
  **Osaka 545-8522 (JP)**
• **Fujiwara, Akira**
  **Osaka-shi**
  **Osaka 545-8522 (JP)**
• **Yahata, Yoichiro**
  **Osaka-shi**
  **Osaka 545-8522 (JP)**

(74) Representative: **Müller - Hoffmann & Partner**
**Patentanwälte**
**Innere Wiener Strasse 17**
**81667 München (DE)**

(54) **Position detection device**

(57)    A touch position detection device includes (i) infrared light sensors and visible light sensors which are sensitive to light of respective different wavelengths, and (ii) an external light intensity calculation section which calculates an estimated value serving as an index of external light intensity, which is intensity of light in the surroundings of a target subject. As such, the touch position detection device is capable of appropriately detecting a position of a figure of the target subject under a broad range of ambient light intensities.

FIG. 1

**Description**

Technical Field

The present invention relates to a position detection device which detects a position of a figure of a target subject by (i) capturing, with light sensors included in an image capture screen, an image of a target subject being placed near or in contact with the image capture screen and (ii) analyzing the captured image so as to detect the position of the figure of the target subject in the captured image.

Background Art

There have been achieved touch panels, each of which (i) captures an image of a pointer, such as a user's finger or a stylus (hereinafter collectively referred to as a pointing member), which points to a position on the touch panel and (ii) performs pattern matching on the image thus captured so as to identify the position that is pointed to by the pointing member. One of such touch panels is disclosed in Patent Literature 1.

Patent Literature 1 discloses a display device having an image-capturing function, in which two or more types of light sensors having respective different light sensitivities are provided in a pixel region. For example, the display device having the image-capturing function is arranged such that (i) rows of pixels each including a light sensor element having a low sensitivity and (ii) rows of pixels each including a light sensor element having a high sensitivity are alternately provided. When the external light is weak, such a display device having the image-capturing function captures an image of a pointing member by using the light sensor elements each having a high sensitivity. On the other hand, when external light is intense, the display device captures the image of the pointing member by using the light sensor elements each having a low sensitivity.

Citation List

> Patent Literature 1
> Japanese Patent Application Publication, *Tokukai*, No. 2006-18219 A (Publication Date: January 19, 2006)

Summary of Invention

Technical Problem

However, the light sensor elements of different types included in the above display device are different from each other in terms of sensitivity to light intensity, whereas are identical in terms of detectable light wavelength. Therefore, for example in a case where the display device is operated under a condition where output of the light sensors due to light reflected by the pointing member is equal to output of the light sensors due to ambient light, neither of the light sensors having respective different light sensitivities is capable of capturing an image.

The present invention has been made so as to solve the problems, and an object of the present invention is to achieve a position detection device capable of appropriately detecting a position of a figure of a target subject under a broad range of ambient light intensities.

Solution to Problem

In order to attain the above object, a position detection device which detects a position of a figure of a target subject by (i) capturing, with a plurality of light sensors included in an image capture screen, an image of the target subject being placed near or in contact with the image capture screen, and (ii) analyzing the captured image so as to detect the position of the figure of the target subject in the image captured, the position detection device is characterized by including: first light sensors and second light sensors being sensitive to light of respective different wavelengths, each of the first light sensors and second light sensors being one of the plurality of light sensors; and estimated value calculation means for calculating, with use of the image captured by the first light sensors, an estimated value serving as an index of external light intensity, which is an intensity of light in the surroundings of the target subject.

In order to attain the above object, a method for controlling a position detection device which detects a position of a figure of a target subject by (i) capturing, with a plurality of light sensors included in an image capture screen, an image of the target subject being placed near or in contact with the image capture screen, and (ii) analyzing the captured image so as to detect the position of the figure of the target subject in the image captured, the method includes: an estimated value calculation step for calculating, with use of the image captured by first light sensors which is one of the plurality of light sensors being constituted by the first light sensors and second light sensors being sensitive to light of respective different wavelengths, an estimated value serving as an index of external light intensity, which is an intensity of light in the surroundings of the target subject.

In order to detect a position of the target subject with use of the captured image including the target subject, it is preferable to accurately calculate the external light intensity which is the intensity of light in the surroundings of the target subject, and then analyze the captured image by using the external light intensity thus calculated.

According to the arrangement, the position detection device includes the plurality of light sensors for capturing the image of the target subject, which plurality of light sensors are constituted by the first light sensors and the second light sensors being sensitive to light of respective different wavelengths. The estimated value calculation means calculates, with use of the image captured by the first light sensors, the estimated value serving as the index of the external light intensity, which is the intensity of light in the surroundings of the target subject. The estimated value can be either the external light intensity itself or a value which reflects a change in the external light intensity. The estimated value thus calculated is used for a variety of processes performed by the position detection device so that each of the processes is performed according to the changing external light intensity.

Since the position detection device includes two types of light sensors sensitive to light of respective different wavelengths, the position detection device is capable of appropriately detecting a position of the figure of the target subject under a broad range of ambient light intensities as compared to a position detection device including only one type of light sensors. Further, since the estimated value is calculated with use of the image captured by the first light sensors, no sensor for measuring an external light intensity is needed. Accordingly, the position detection device can detect a change in the external light intensity without having a complicated arrangement.

As described above, the position detection device according to the present invention is a position detection device which detects a position of a figure of a target subject by (i) capturing, with a plurality of light sensors included in an image capture screen, an image of the target subject being placed near or in contact with the image capture screen, and (ii) analyzing the captured image so as to detect the position of the figure of the target subject in the image captured, the position detection device being characterized by including: first light sensors and second light sensors being sensitive to light of respective different wavelengths, each of the first light sensors and second light sensors being one of the plurality of light sensors; and estimated value calculation means for calculating, with use of the image captured by the first light sensors, an estimated value serving as an index of external light intensity, which is an intensity of light in the surroundings of the target subject.

As described above, the method according to the present invention is a method for controlling a position detection device which detects a position of a figure of a target subject by (i) capturing, with a plurality of light sensors included in an image capture screen, an image of the target subject being placed near or in contact with the image capture screen, and (ii) analyzing the image captured so as to detect the position of the figure of the target subject in the image captured, the method including: an estimated value calculation step for calculating, with use of the image captured by first light sensors which is one of the plurality of light sensors being constituted by the first light sensors and second light sensors being sensitive to light of respective different wavelengths, an estimated value serving as an index of external light intensity, which is an intensity of light in the surroundings of the target subject.

Accordingly, the present invention makes it possible to appropriately detect a position of a figure of a target subject under a broad range of ambient light intensities.

Brief Description of Drawings

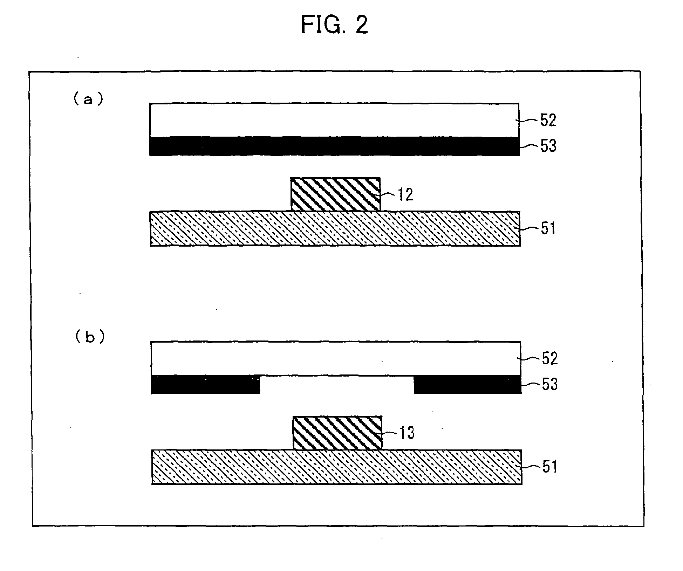

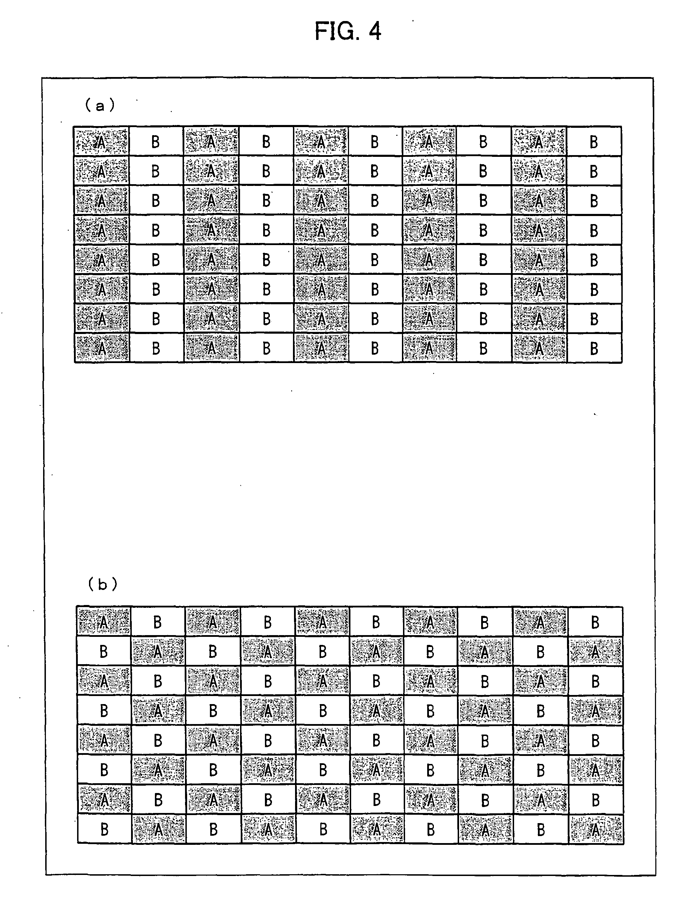

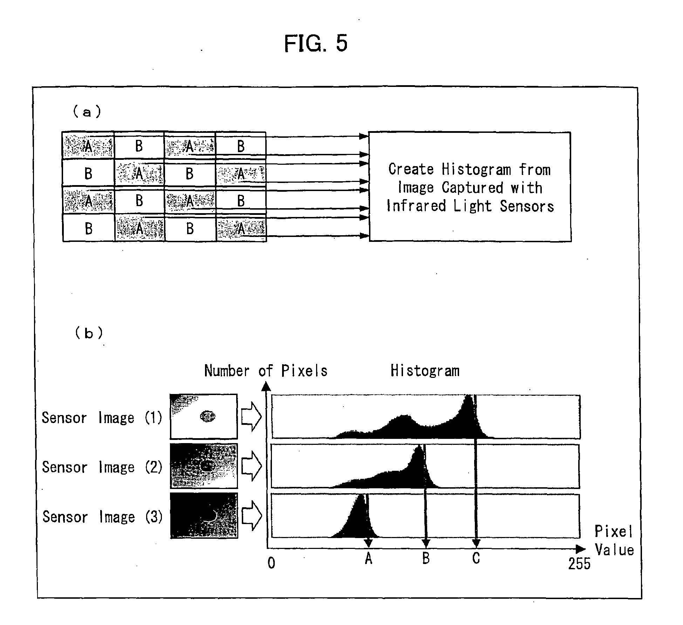

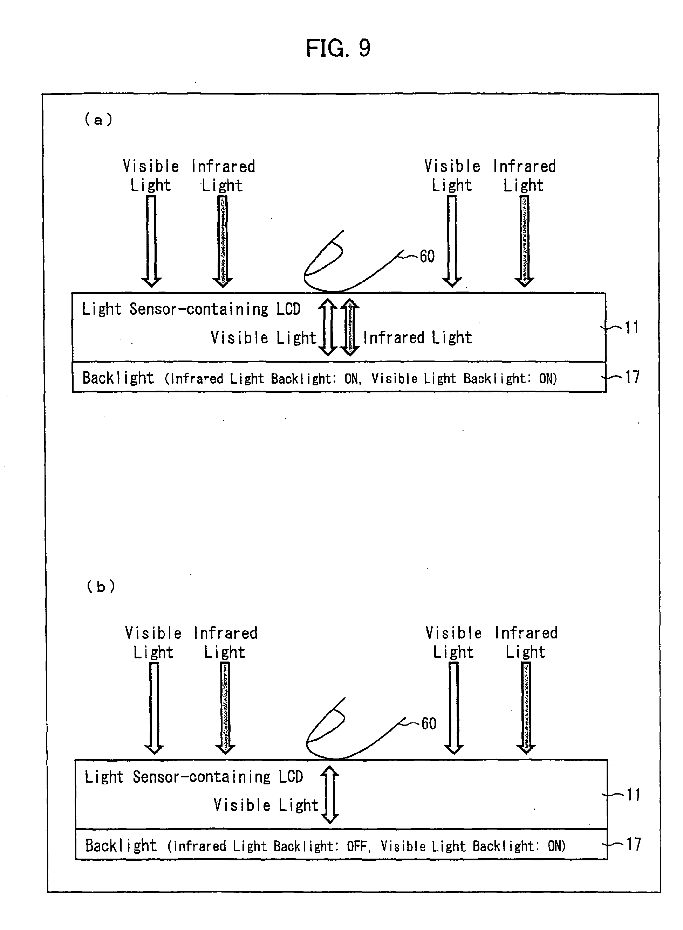

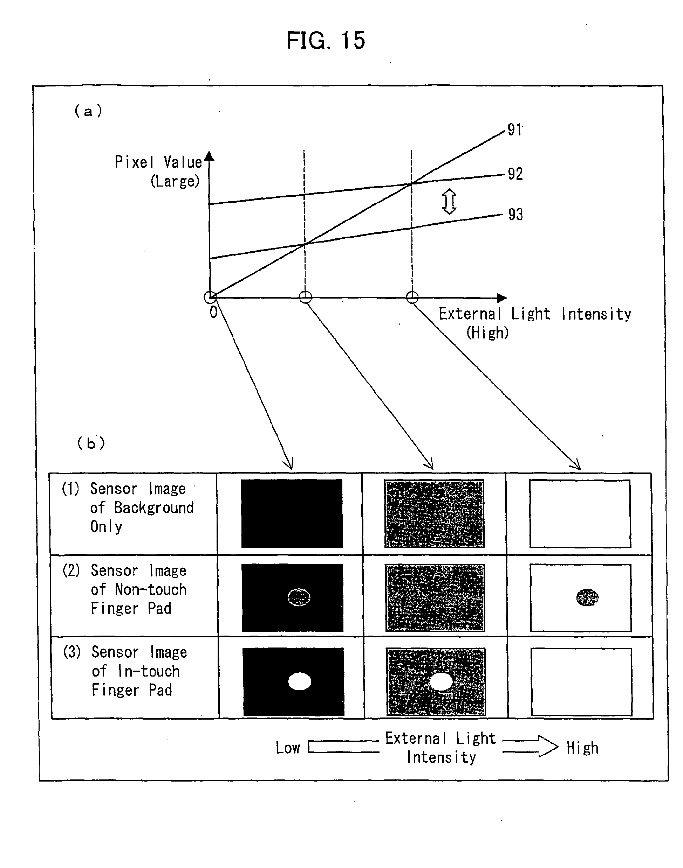

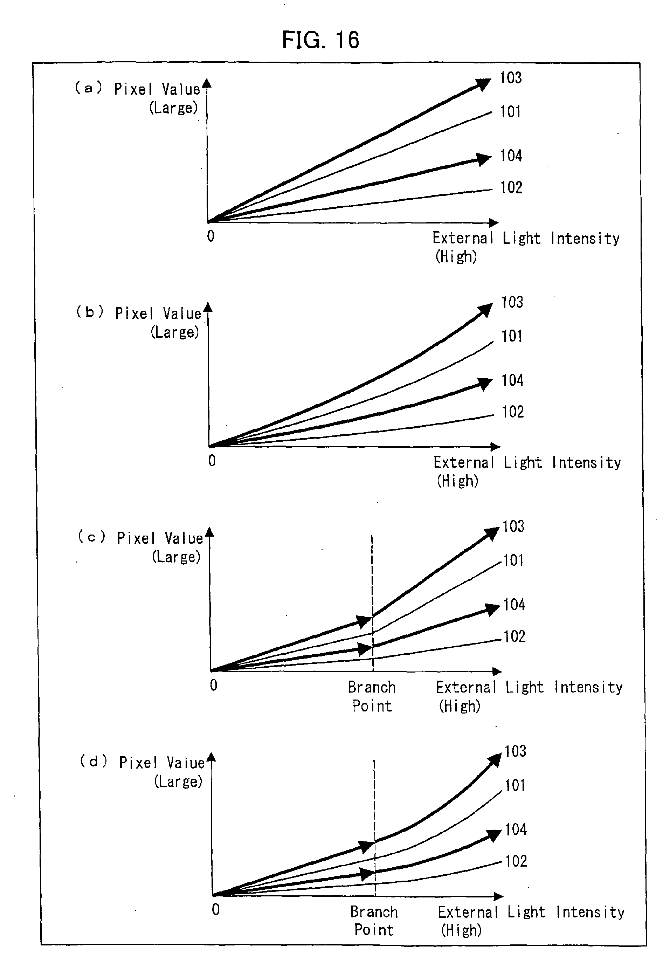

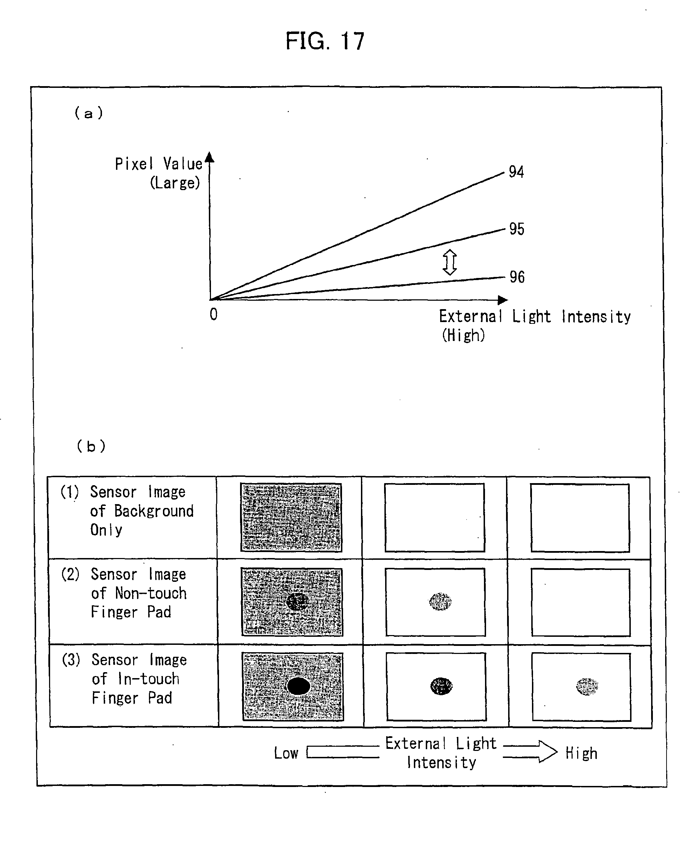

Fig. 1

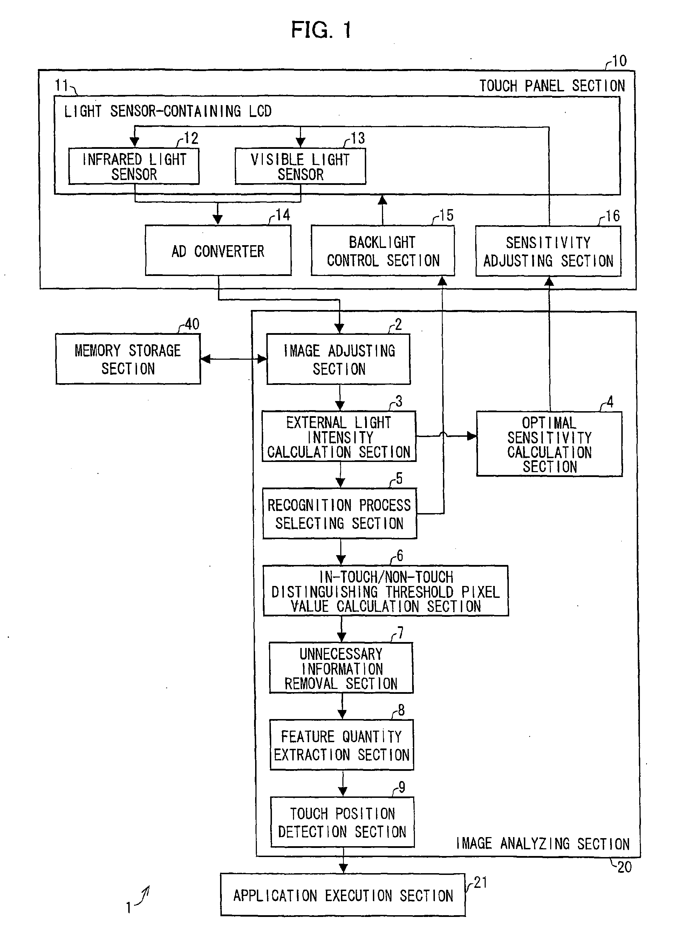

Fig. 1 is a block diagram illustrating an arrangement of a touch position detection device according to an embodiment of the present invention.
Fig. 2
(a) of Fig. 2 schematically illustrates an arrangement of one of infrared light sensors. (b) of Fig. 2 schematically illustrates an arrangement of one of visible light sensors.
Fig. 3

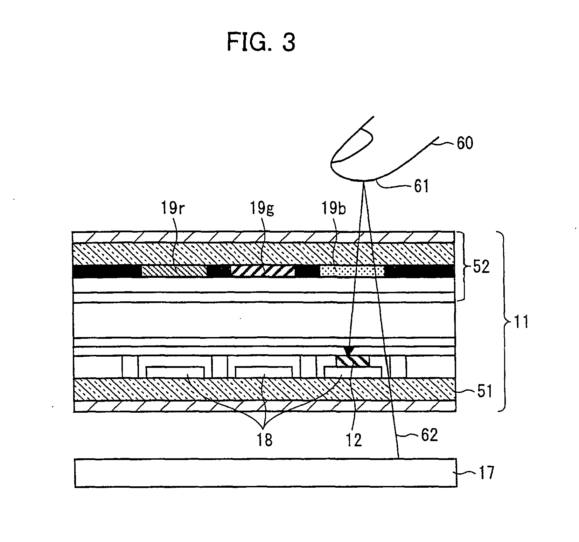

Fig. 3 schematically illustrates an arrangement of a light sensor-containing LCD, which is included in the touch position detection device.
Fig. 4
(a) and (b) of Fig. 4 illustrate how the infrared light sensors and the visible light sensors are arranged.
Fig. 5
(a) of Fig. 5 is a diagram for describing how external light intensity is calculated from an image captured by the infrared light sensors. (b) of Fig. 5 illustrates a relationship between external light intensity and a histogram created by an external light intensity calculation section.
Fig. 6

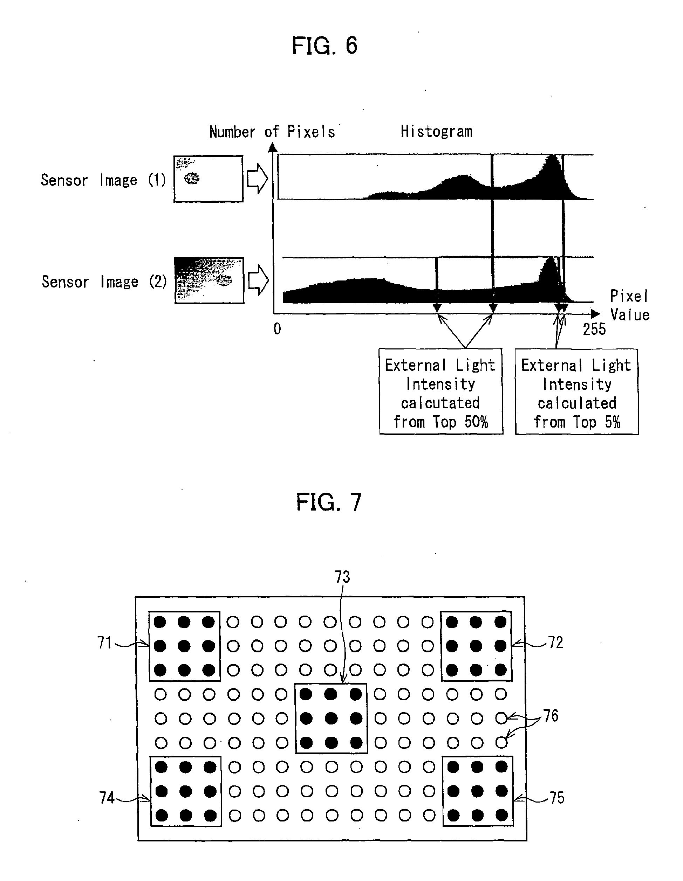

Fig. 6 is a diagram for describing advantage of a process performed by the external light intensity calculation section.
Fig. 7
Fig. 7 illustrates a variation of the process performed by the external light intensity calculation section.
Fig. 8

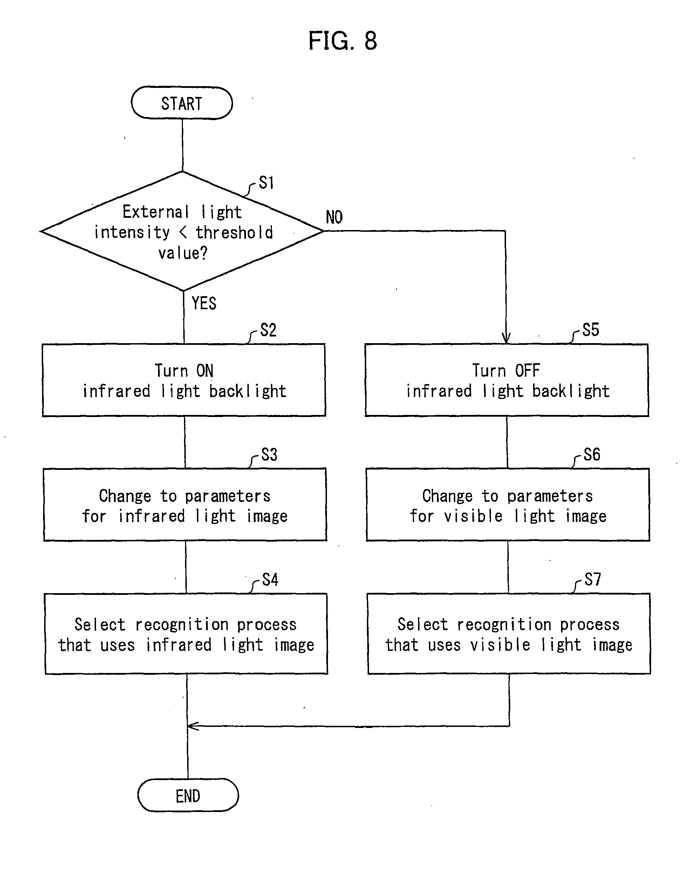

Fig. 8 is a flowchart illustrating an example of a flow of processes performed by a recognition process selecting section.
Fig. 9
(a) of Fig. 9 illustrates a state of a backlight in a reflected light recognition mode. (b) of Fig. 9 illustrates a state of the backlight in a shadow recognition mode.
Fig. 10

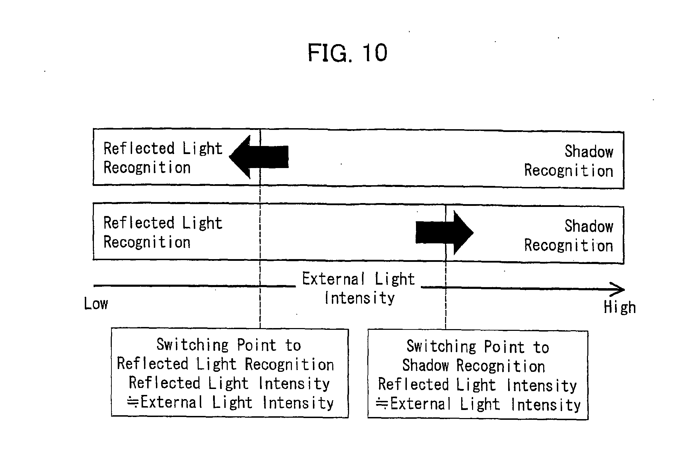

Fig. 10 illustrates how the reflected light recognition mode is switched to the shadow recognition mode, and how the shadow recognition mode is switched to the reflected light recognition mode.
Fig. 11

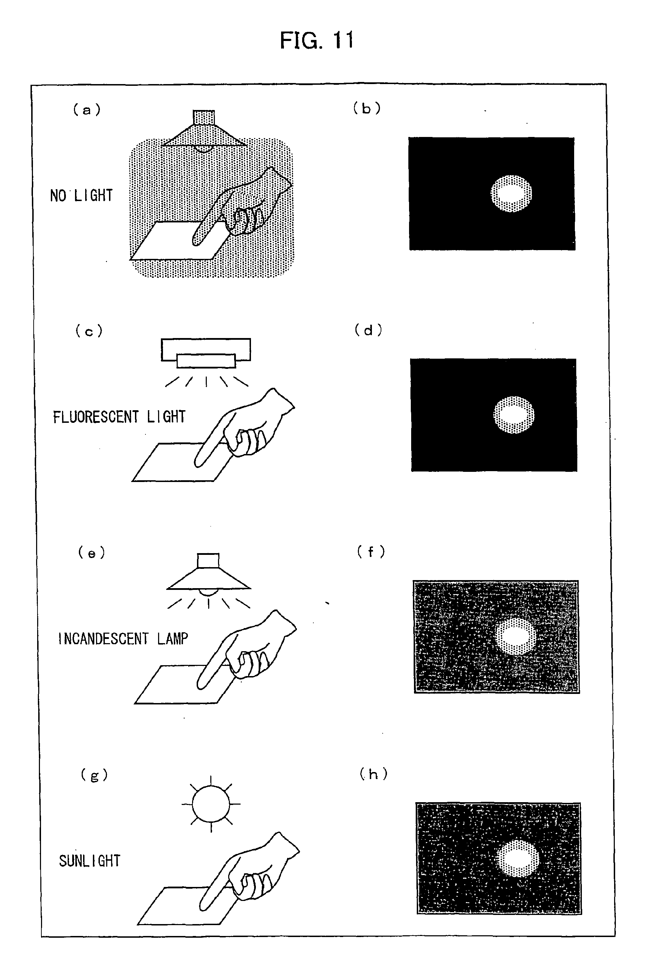

Fig. 11 conceptually illustrates examples of images captured in the reflected light recognition mode.
Fig. 12

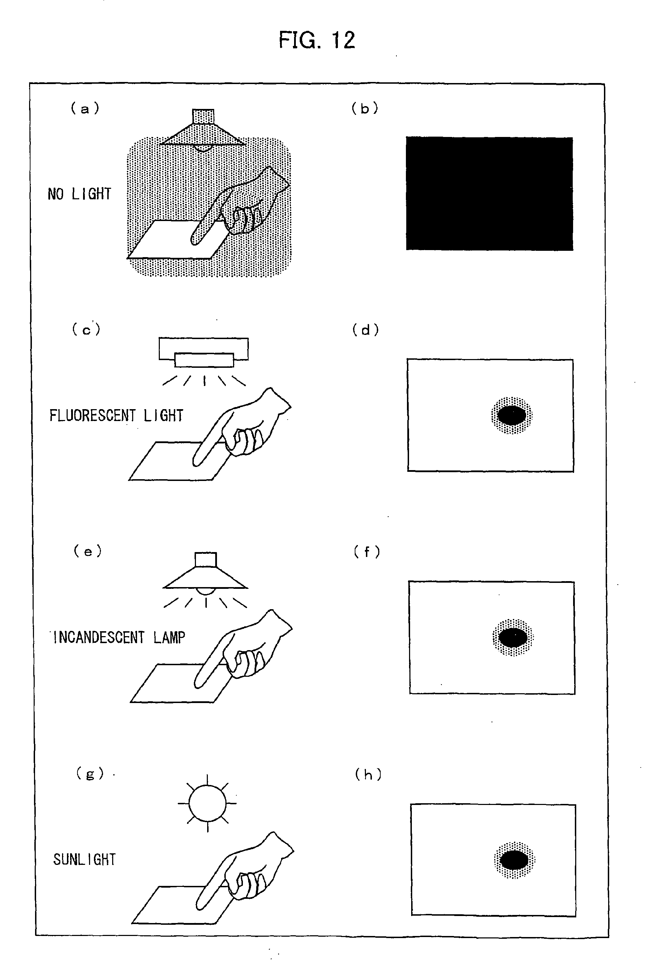

Fig. 12 conceptually illustrates examples of images captured in the shadow recognition mode.
Fig. 13

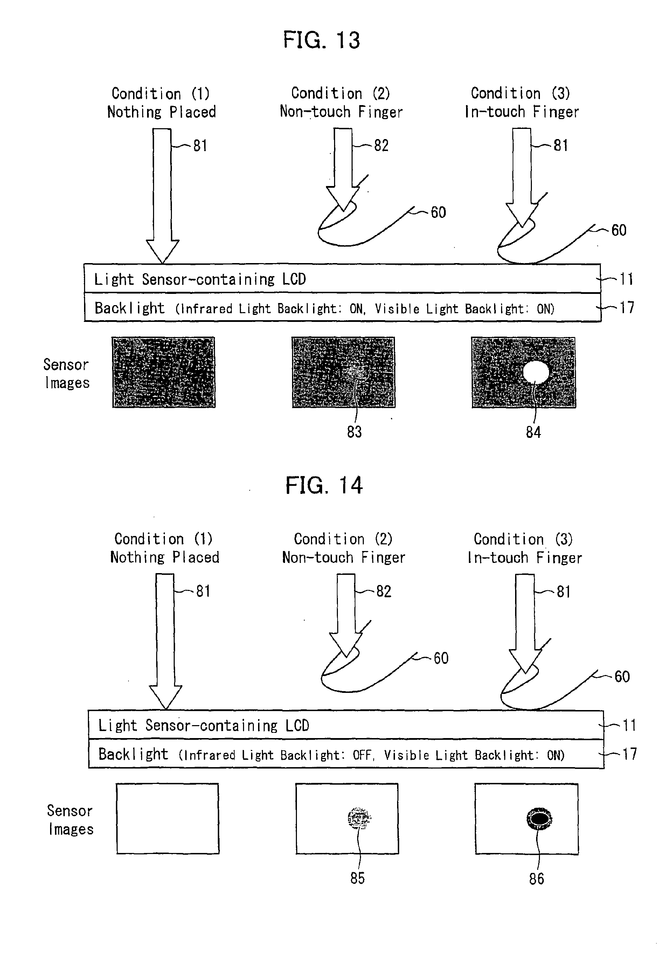

Fig. 13 illustrates images of a pointing member captured in the reflected light recognition mode when the pointing member is in touch with a touch panel (i.e., in-touch) and when it is not in touch with the touch panel (i.e., non-touch).
Fig. 14
Fig. 14 illustrates images of the pointing member captured in the shadow recognition mode when the pointing member is in touch with the touch panel (i.e., in-touch) and when it is not in touch with the touch panel (i.e., non-touch).
Fig. 15
(a) of Fig. 15 is a graph illustrating a relationship among (i) the external light intensity, (ii) a pixel value of pixels below a finger pad being not in touch with the touch panel (non-touch), and (iii) a pixel value of pixels below the finger pad in touch with the touch panel (in-touch), in the reflected light recognition mode. (b) of Fig. 15 illustrates captured images which vary according to a change in the external light intensity.
Fig. 16
(a) though (d) of Fig. 16 are graphs each of which illustrates how the following values are related with each other in the reflected light recognition mode: (i) the pixel value of pixels below the finger pad being not in touch with the touch panel (non-touch), (ii) the pixel value of pixels below the finger pad in touch with the touch panel (in-touch), (iii) an in-touch/non-touch distinguishing threshold pixel value, and (iv) an unnecessary information-distinguishing threshold pixel value according to which unnecessary information is removed.
Fig. 17
(a) of Fig. 17 is a graph illustrating how the external light intensity affects a pixel value of pixels below the finger pad being not in touch with the touch panel (non-touch), and a pixel value of pixels below the finger pad in touch with the touch panel (in-touch), in the shadow recognition mode. (b) of Fig. 17 illustrates captured images which vary according to a change in the external light intensity.
Fig. 18

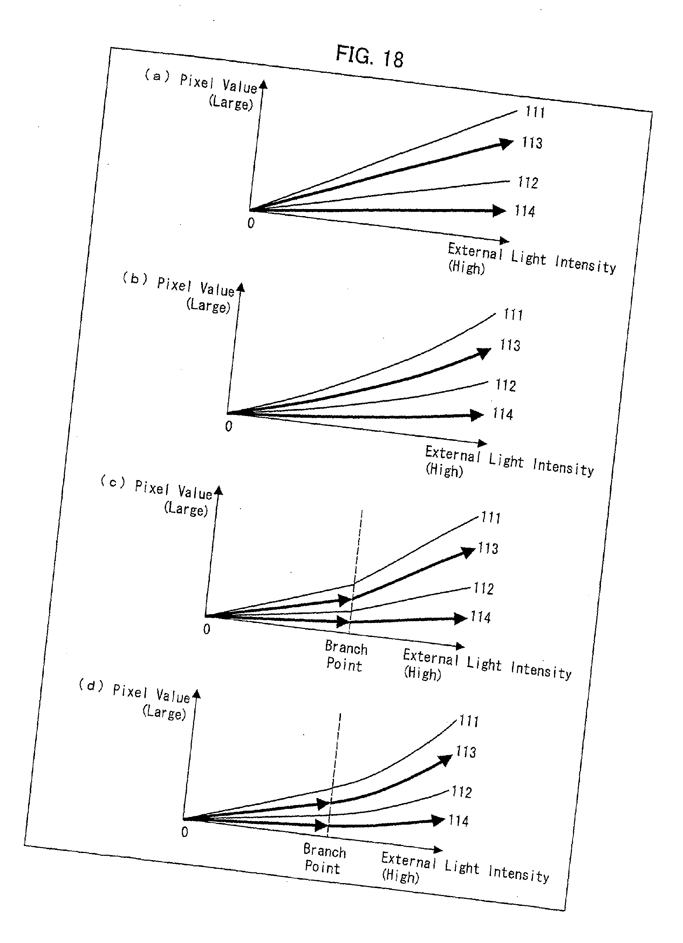

(a) through (d) of Fig. 18 are graphs each of which illustrates how the following values are related with each other in the shadow recognition mode: (i) the pixel value of the pixels below the finger pad being not in touch with the touch panel (non-touch), (ii) the pixel value of the pixels below the finger pad in touch with the touch panel (in-touch). (iii) an in-touch/non-touch distinguishing threshold pixel value, and (iv) an unnecessary information-distinguishing threshold pixel value according to which unnecessary information is removed.
Fig. 19

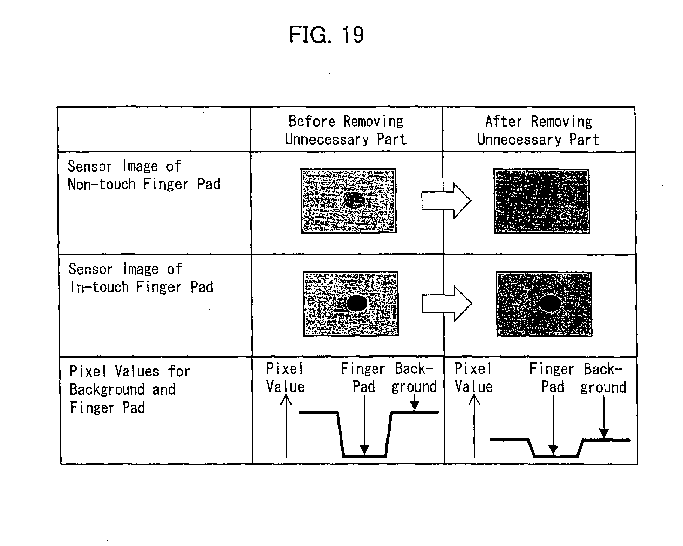

Fig. 19 is a table for explaining a process performed by an unnecessary information removal section, in the shadow recognition mode.
Fig. 20
(a) and (b) illustrate a problem arising in a case where the external light intensity saturates in the shadow recognition mode, and a solution to the problem.
Fig. 21
(a) and (b) illustrate a problem arising in a case where the in-touch/non-touch distinguishing threshold pixel value saturates in the reflected light recognition mode, and a solution to the problem.
Fig. 22

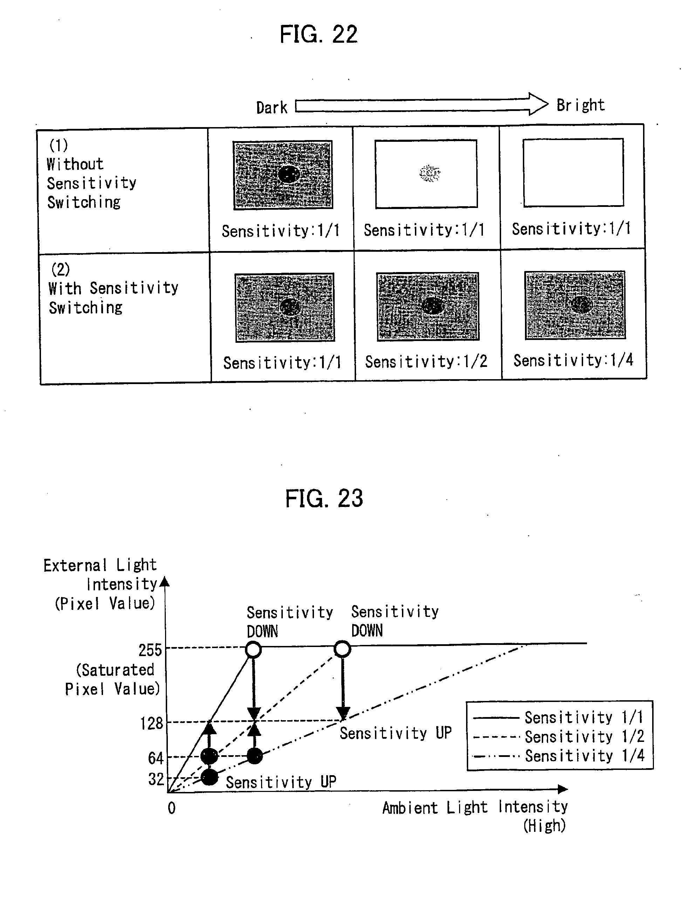

Fig. 22 illustrates examples of images captured in the shadow recognition mode, (i) in a case where a sensitivity is changed and (ii) in a case where sensitivity is not changed.
Fig. 23
Fig. 23 is a graph illustrating an example of a sensitivity switching process performed by an optimal sensitivity calculation section.
Fig. 24

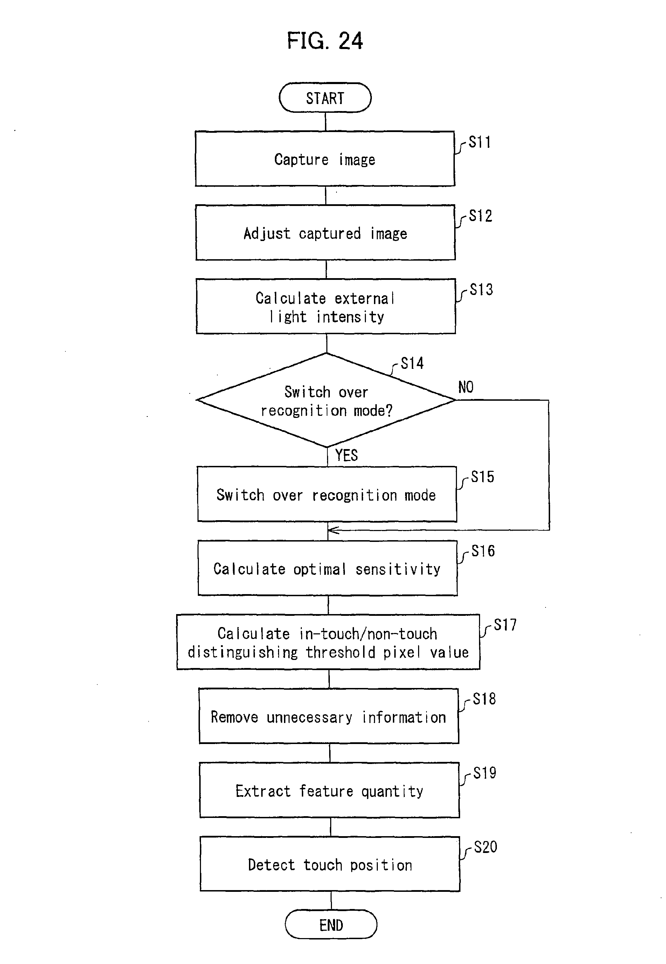

Fig. 24 is a flowchart illustrating an example of a flow of a touch position detection process performed by the touch position detection device.
Fig. 25

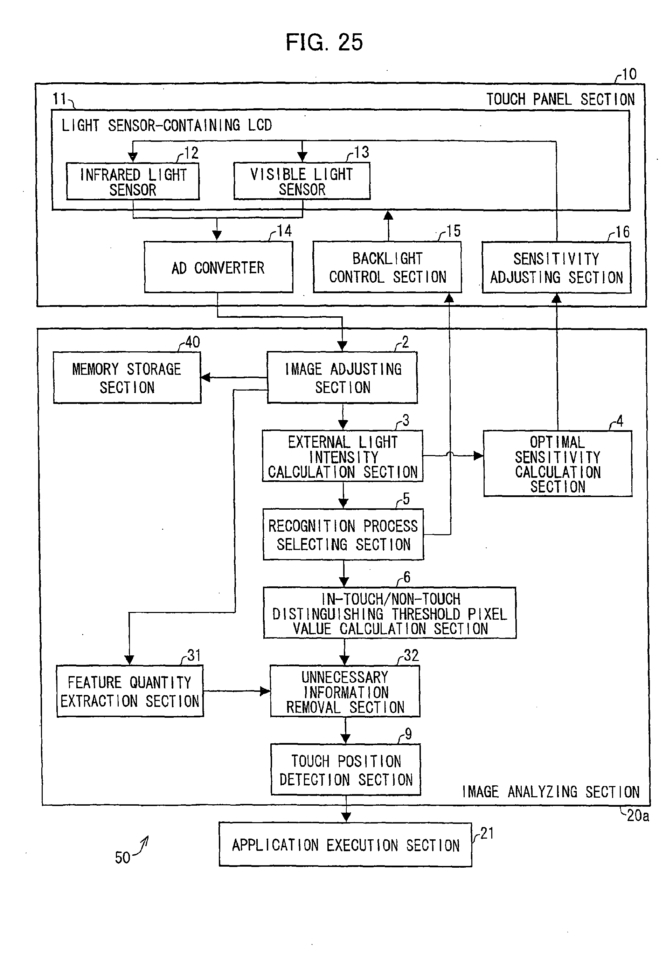

Fig. 25 is a block diagram illustrating an arrangement of a touch position detection device according to another embodiment of the present invention.
Fig. 26

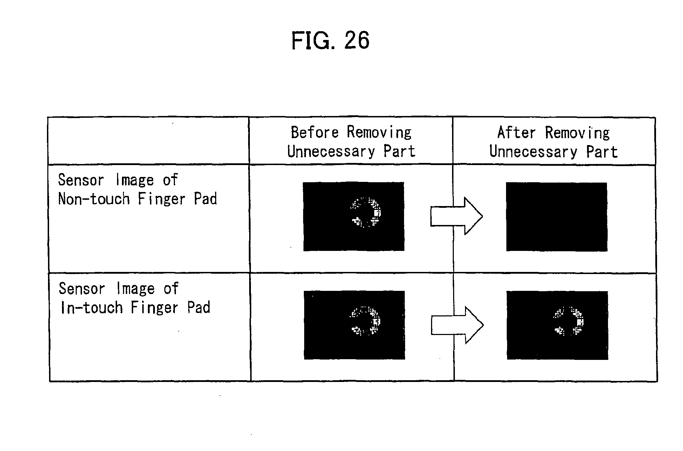

Fig. 26 is a table for explaining an unnecessary information removal process performed by the unnecessary information removal section, in a case of the shadow recognition mode.
Fig. 27

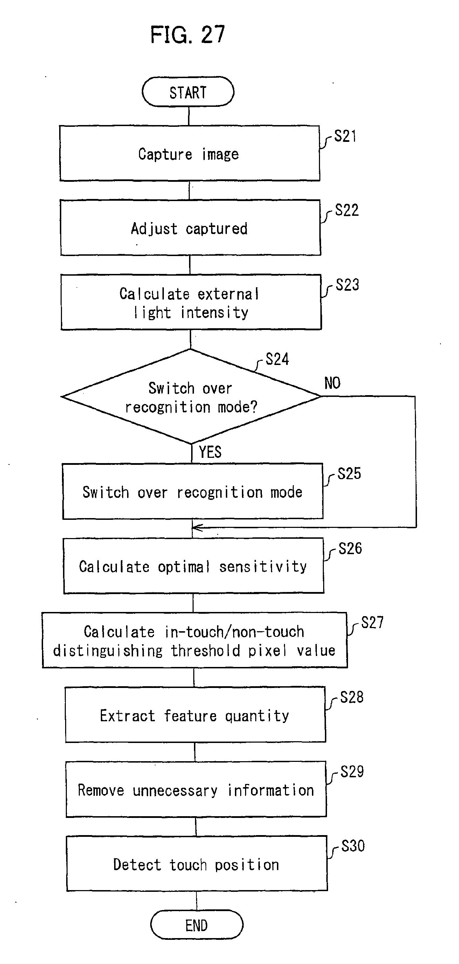

Fig. 27 is a flowchart illustrating an example of a flow of the touch position detection process performed by the touch position detection device.

Description of Embodiments

Embodiment 1

One embodiment of the present invention is described below with reference to Figs. 1 through 24. Described below as one of embodiments of the present invention is a touch position detection device 1, which (i) captures an image of a pointer (hereinafter collectively referred to as a "pointing member") such as a user's finger or a stylus which points at a position on a touch panel and (ii) analyzes the image captured so as to detect the position pointed at by the pointing member. It should be noted that the touch position detection device can be referred to as a display device, an image capture device, an input device, or an electronic device.

The touch position detection device 1 is capable of switching between a reflected light recognition mode and a shadow recognition mode. The reflected light recognition mode is for capturing a figure of the pointing member (target subject) by making use of light reflected by the pointing member, whereas the shadow recognition mode is for capturing a shadow of the pointing member. The reflected light recognition mode and the shadow recognition mode are switched over by a below-described recognition process selecting section 5.

(Arrangement of Touch Position Detection Device 1)

Fig. 1 is a block diagram illustrating an arrangement of the touch position detection device 1 of the present embodiment. As illustrated in Fig. 1, the touch position detection device (position detection device) 1 includes: a touch panel section (image capturing section) 10; an image analyzing section 20; an application execution section 21; and a memory storage section 40.

The memory storage section 40 stores (i) control programs for controlling each section, (ii) an OS program, (iii) an application program, and (iv) a variety of data to be read out for execution of these programs. These programs (i) to (iii) are executed by the image analyzing section 20 and the application execution section 21. The memory storage section 40 is constituted by a nonvolatile memory storage device such as a hard disk or a flash memory.

The touch position detection device 1 further includes a primary memory storage section (not illustrated), which is constituted by a volatile memory storage device such as a RAM (Random Access Memory). The primary memory storage section serves as a work area, on which data is temporarily stored in the course of execution of the above programs by the image analyzing section 20 or the application execution section 21.

The touch panel section 10 includes: a light sensor-containing LCD (liquid crystal panel/display) (image capture screen) 11; AD (analog/digital) converter 14; a backlight control section 15; and a sensitivity adjusting section 16. The light sensor-containing LCD 11 contains light sensors (infrared light sensors (first light sensors) 12 and visible light sensors (second light sensors) 13), which serve as image capturing elements. Further, as illustrated in Fig. 3, the touch panel section 10 includes a backlight 17.

The backlight 17 includes: an infrared light source that emits infrared light toward the pointing member which is the target subject; and a visible light source that emits visible light toward the pointing member which is the target subject. Both the infrared light source and the visible light source are in an ON state in the reflected light recognition mode, whereas only the infrared light source is in the ON state in the shadow recognition mode (this is described later in detail). It should be noted here that the infrared light source serves also as a light source of a backlight for the light sensor-containing LCD 1 in carrying out display operation.

The infrared light sensors 12 and the visible light sensors 13 are sensitive to light of different wavelengths, respectively. In addition to the infrared light sensors 12 and the visible light sensors 13, another light sensor (not illustrated) for compensating a dark current may be provided in the touch panel section 10. The another light sensor is for adjusting (compensating) a detection property which changes depending on an external factor such as temperature.

(Arrangements of Infrared Light Sensors 12 and Visible Light Sensors 13)

(a) of Fig. 2 schematically illustrates an arrangement of the infrared light sensors 12, and (b) of Fig. 2 schematically illustrates an arrangement of the visible light sensors 13. The infrared light sensors 12 and the visible light sensors 13 are provided on an active matrix substrate 51. Although both the infrared light sensors 12 and the visible light sensors 13 themselves are identical light sensors, they are different from each other in that only the infrared light sensors 12 include an optical filter 53 above them (i.e., on a side thereof facing a counter substrate 52). The optical filter 53 shuts out visible light (wavelength: approx. 380 nm to 750 nm) but transmits infrared light (wavelength: approx. 800 nm to 1 mm). Since no optical filter 53 is provided above each of the visible light sensors 13, visible light entering the visible light sensors 13 is not shut out. Therefore, the infrared light sensors 12 are subjected mainly to infrared light, whereas the visible light sensors 13 are subjected mainly to visible light.

The above difference between the arrangements of the infrared light sensors 12 and the visible light sensors 13 allows the infrared light sensors 12 to be used for capturing (i) an infrared light image for calculation of the external light intensity and (ii) an infrared light image in the reflected light recognition mode, and the visible light sensors 13 to be used for capturing a visible light image in the shadow recognition mode.

The optical filter 53 is not particularly limited in terms of its composition, and can be formed of, for example, a laminated structure of color filters.

Alternatively, the infrared light sensors 12 and the visible light sensors 13 can be made by different types of sensors, which are sensitive to light of respective different wavelengths, without the optical filter 53.

(Arrangement of Light sensor-containing LCD 11)

Since the light sensor-containing LCD 11 contains light sensors, the light sensor-containing LCD 11 is capable of not only displaying an image, but also capturing an image. Therefore, the light sensor-containing LCD 11 serves as an image capture screen, which captures an image (hereinafter referred to as an "image captured" or a "captured image") including a figure of a pointing member that touches a surface of the light sensor-containing LCD 11 (here, the light sensor-containing LCD serves also as a touch panel).

Fig. 3 schematically illustrates an arrangement of the light sensor-containing LCD 11. As illustrated in Fig. 3, the light sensor-containing LCD 11 includes: pixel electrodes 18 provided on the active matrix substrate 51; and color filters 19r, 19g, and 19b which are color filters of red (R), green (G), and blue (B), respectively, and are provided on a counter substrate 52. Three picture elements of R, G, and B constitute each of pixels.

The light sensors (the infrared light sensors 12 or the visible light sensors 13) are provided for the respective pixels in the light sensor-containing LCD 11. In other words, the infrared light sensors 12 or the visible light sensors 13 are provided, in a matrix manner, on the active matrix substrate 51 of the light sensor-containing LCD 11. However, how and how many the infrared light sensors 12 and/or the visible light sensors 13 are provided are not limited to the above arrangement, and can be changed as appropriate. Although one of the infrared light sensors 12 is provided in the vicinity of a corresponding pixel electrode 18 above which the color filter 19b of blue is provided in Fig. 3, the present invention is not limited to the arrangement of Fig. 3. Alternatively, one of the infrared light sensors 12 (or the visible light sensors 13) can be provided in the vicinity of a corresponding pixel electrode 18 above which the color filter 19r of red is provided, and can also be provided in the vicinity of a corresponding pixel electrode 18 above which the color filter 19g of green is provided.

Signals obtained by the infrared light sensors 12 and the visible light sensors 12 are digitalized by the AD converter 14, and then transmitted to an image adjusting section 2. The image captured by the infrared light sensors 12 are referred to as an infrared light image, whereas the image captured by the visible light sensors 13 are referred to as a visible light image. The infrared light image and the visible light image may be collectively referred to as a sensor image.

(Arrangement of Image Analyzing Section 20)

The image analyzing section 20 includes: the image adjusting section 2; an external light intensity calculation section (estimated value calculation means) 3; an optimal sensitivity calculation section (sensitivity adjusting means) 4; a recognition process selecting section (switching means) 5; an in-touch/non-touch distinguishing threshold pixel value calculation section (reference value calculation means) 6; an unnecessary information removal section (image processing means) 7; a feature quantity extraction section (feature quantity extraction means) 8; and a touch position detection section (position calculation means) 9.

The image adjusting section 2 carries out calibration (adjustment of gain and offset) for the image (the infrared light image and the visible light image) captured by the touch panel section 10, and then outputs the image thus calibrated toward the external light intensity calculation section 3, the recognition process selecting section 5, and the unnecessary information removal section 7. Hereinafter, the descriptions are given on the assumption that the image outputted is a gray scale image with 8 bit and 256 gray scales. It should be noted that the image adjusting section 2 serves also as acquiring means for acquiring the captured image from the touch panel section 10. The image adjusting section 2 can store, to the memory storage section 40, the captured image thus obtained or the captured image thus calibrated.

The external light intensity calculation section 3 calculates an estimated value with use of the infrared light image outputted from the image adjusting section 2. The estimated value serves as an index of the external light intensity that is an intensity of light in the surroundings of the pointing member, and is a value which is estimated in consideration of a change in the external light intensity. The estimated value itself does not have to indicate the external light intensity, and can be any value provided that the external light intensity is calculated from the value through a predetermined calculation. The estimated value is also referred to as a pixel value. The external light intensity calculation section 3 outputs the estimated value thus calculated toward the optimal sensitivity calculation section 4, the recognition process selecting section 5, and the in-touch/non-touch distinguishing threshold pixel value calculation section 6.

The external light intensity is an intensity of light in the surroundings of the pointing member (target subject), which light has entered the infrared light sensors 12. The external light intensity calculation section 3 performs an identical process both in a case of the shadow recognition mode and in a case of the reflected light recognition mode. Processes performed by the external light intensity calculation section 3 are described later in more detail.

The optimal sensitivity calculation section 4 calculates, according to the estimated value of the external light intensity calculated by the external light intensity calculation section 3, a sensitivity optimal for the infrared light sensors 12 and for the visible light sensors 13 to recognize the pointing member. The optimal sensitivity calculation section 4 then outputs the optimal sensitivity thus calculated toward the sensitivity adjusting section 16. The process performed by the optimal sensitivity calculation section 4 is described later in more detail. As described earlier, the infrared light sensors 12 and the visible light sensors 13 themselves are identical light sensors. Therefore, the optimal sensitivity calculation section 4 calculates an identical sensitivity, which is suitable for both the infrared light sensors 12 and the visible light sensors 13.

The sensitivity adjusting section 16 adjusts the sensitivity of each of the infrared light sensors 12 and the visible light sensors 13 to the optimal sensitivity outputted from the optimal sensitivity calculation section 4.

According to the estimated value of the external light intensity calculated by the external light intensity calculation section 3, the recognition process selecting section 5 switches over between the reflected light recognition mode and the shadow recognition mode. The reflected light recognition mode is a first image capturing method for capturing a light figure being made by light having been emitted from the backlight 17 and then reflected by the target subject. The shadow recognition mode is a second image capturing method for capturing a shadow being made by the target subject shutting out external light that enters the infrared light sensors 12 (or the visible light sensors 13). In other words, the reflected light recognition mode is a first detection method for detecting a position of the figure of the target subject by analyzing the captured image including the light figure being made by light emitted from the backlight 17 and then reflected by the target subject, whereas the shadow recognition mode is a second detection method for detecting a position of the figure of the target subject by analyzing the captured image including the shadow being made by the target subject shutting out the external light that enters the infrared light sensors 12 (or the visible light sensors 13). More specifically, the recognition process selecting section 5 causes the backlight control section 15 to turn on or turn off the infrared light source in the backlight 17. That is, the recognition process selection section 5 causes the backlight control section 15 to (i) turn on the infrared light source in the backlight 17 when the reflected light recognition mode is selected, and (ii) turn off the infrared light source in the backlight 17 when the shadow recognition mode is selected.

Further, the recognition process selecting section 5 switches over between processes of the in-touch/non-touch distinguishing threshold pixel value calculation section 6. The processes performed by the recognition process selecting section 5 is described later in detail.

The in-touch/non-touch distinguishing threshold pixel value calculation section 6 calculates a reference value of a pixel value (an in-touch/non-touch distinguishing threshold pixel value and an unnecessary information-distinguishing threshold pixel value according to which unnecessary information is removed), according to which information unnecessary for recognizing the pointing member is removed by the unnecessary information removal section 7. More specifically, the in-touch/non-touch distinguishing threshold pixel value calculation section 6 calculates, from the estimated value of the external light intensity calculated by the external light calculation section 3, the in-touch/non-touch distinguishing threshold pixel value and the unnecessary information-distinguishing threshold pixel value according to which unnecessary information is removed. The in-touch/non-touch distinguishing threshold pixel value is the reference value of a pixel value according to which the figure of the pointing member being not in contact with the light sensor-containing LCD 11 is removed, whereas the unnecessary information-distinguishing threshold pixel value according to which unnecessary information is removed is the reference value of a pixel value according to which pixels obfuscating the recognition of the figure of the pointing member is removed. In other words, the in-touch/non-touch distinguishing threshold pixel value calculation section 6 calculates the reference value of a pixel value for removing a figure other than the figure of the pointing member in touch with the light sensor-containing LCD 11. The processes performed by the in-touch/non-touch distinguishing threshold pixel value calculation section 6 are described later in detail.

According to the in-touch/non-touch distinguishing threshold pixel value (and the unnecessary information-distinguishing threshold pixel value according to which unnecessary information is removed) calculated by the in-touch/non-touch distinguishing threshold pixel value calculation section 6, the unnecessary information removal section 7 alters pixel value(s) of part of pixels in the captured image, so as to remove information which is contained in the captured image but is unnecessary for recognizing the pointing member. In other words, the unnecessary information removal section 7 alters the pixel value(s) of part of the pixels in the captured image so that the figure of the pointing member being not in contact with the image capture screen is removed. The unnecessary information removal section 7 deals with the infrared light image in a case of the reflected light recognition mode, whereas deals with the visible light image in a case of the shadow recognition mode.

By edge detection process, such as use of Sobel filter or the like, the feature quantity extraction section 8 extracts, from the pixels in the captured image having been processed by the unnecessary information removal section 7, a feature quantity (edge feature quantity) indicating a feature of the pointing member. The feature quantity extraction section 8 extracts the feature quantity of the pointing member, for example, as a feature quantity containing eight-direction vectors indicative of inclination (gradation) directions of pixel values of a target pixel and eight pixels adjacent to the target pixel. Such a method of extracting the feature quantity is disclosed in, for example, Japanese Patent Application Publication, *Tokukai*, No. 2008-250949 A.

Specifically, the feature quantity extraction section 8 calculates (i) a longitudinal direction inclination quantity indicative of the inclination between the pixel value of the target pixel and the pixel values of the pixels adjacent to the target pixel and (ii) a lateral direction inclination quantity indicative of the inclination between the pixel value of the target pixel and the pixel values of the pixels adjacent to the target pixel. Next, the feature quantity extraction section 8 identifies, based on the longitudinal direction inclination quantity and the lateral direction inclination quantity, edge pixels where brightness changes abruptly. Then, the feature quantity extraction section 8 extracts, as the feature quantity, vectors indicative of inclination directions of pixel values of the edge pixels.

The feature quantity extraction process performed by the feature quantity extraction section 8 is not particularly limited, and can be selected from those capable of detecting a shape (especially, an edge) of the pointing member. Alternatively, the feature quantity extraction section 8 may perform conventional pattern matching or the like image processing process so as to detect the figure of the pointing member (feature region). The feature quantity thus extracted and the pixels from which the feature quantity is extracted are supplied to the touch position detecting section 9 from the feature quantity extraction section 8 in such a manner that the feature quantity and the pixels from which the feature quantity is extracted are associated with each other.

The touch position detecting section 9 identifies a touch position (a position, in the captured image, of the figure of the pointing member) by performing pattern matching on the feature region, which exhibits the feature quantity extracted by the feature quantity extraction section 8. Specifically, the touch position detecting section 9 performs the pattern matching with use of (i) a predetermined model pattern constituted by a plurality of pixels indicative of inclination directions of pixel values and (ii) a pattern of the inclination directions, which are indicated by the feature quantity extracted by the feature quantity extraction section 8. The touch position detecting section 9 then detects, as the figure of the pointing member, a region where the number of pixels whose inclination direction matches the inclination direction contained in the plurality of pixels constituting the predetermined model pattern reaches a predetermined number.

The touch position detecting section 9 can perform any position detection method provided that a position of the figure of the pointing member is appropriately identified. The touch position detecting section 9 outputs, to the application execution section 21, coordinates indicating the touch position thus identified.

Based on the coordinates outputted from the touch position detecting section 9, the application execution section 21 executes an application corresponding to the coordinates, or performs a process corresponding the coordinates with use of a particular application. The application execution section 21 can execute any kind of application.

The in-touch/non-touch distinguishing threshold pixel value calculation section 6, the unnecessary information removal section 7, the feature quantity extraction section 8, and the touch position detecting section 9 can be regarded also as process execution sections (process execution means), which perform particular processes according to the estimated value of the external light intensity calculated by the external light intensity calculation section 3.

(Arrangements of Infrared Light Sensors 12 and Visible Light Sensors 13)

Fig. 4 illustrates how the infrared light sensors 12 and the visible light sensors 13 are arranged. In Fig. 4, "A" represents one of the infrared light sensors 12, and "B" represents one of the visible light sensors 13. The light sensor-containing LCD 11 can be configured such that array of the infrared light sensors 12 and array of the visible light sensors 13 are arranged alternately (see (a) of Fig. 4).

Alternatively, the light sensor-containing LCD 11 can be configured such that the infrared light sensors 12 and the visible light sensors 13 are staggered (see (b) of Fig. 4). In such a case, the infrared light sensors 12 and the visible light sensors 13 are arranged checkerwise.

The infrared light sensors 12 and the visible light sensors 13 can be provided in a pattern different from those described above, provided that an image can be appropriately obtained.

(Detail of Process Performed by External Light Intensity Calculation Section 3)

The following description discusses in more detail as to a process performed by the external light intensity calculation section 3. Fig. 5 is a diagram for describing a process performed by the external light intensity calculation section 3.

The external light intensity calculation section 3 selects at least some of output values (pixel values) from the output values, which are outputted from the infrared light sensors 12 and are indicative of quantity of light received. Next, the external light intensity calculation section 3 places the output values thus selected in the descending order. Then, the external light intensity calculation section 3 employs, as the estimated value of the external light intensity, an output value ranked at a predetermined place in the descending order (see Fig. (a) of Fig. 5).

Specifically, the external light calculation section 3 creates a histogram for the captured image obtained by the infrared light sensors 12, where the pixel values of the pixels in the captured image are placed in the descending order. The histogram illustrates a relationship between (i) the pixel values and (ii) the number of pixels having these pixel values. The histogram is created preferably by using pixel values of all the pixels in the captured image. However, for the sake of lower cost and/or faster processing speed, the histogram may be created by using the pixel values of some of all the pixels (i.e., output values outputted from all the infrared light sensors 12) that are in the captured image. That is, the histogram can be created by selectively using the pixel values of some of the pixels belonging to equally distanced rows and/or columns.

It should be noted that in the shadow recognition mode, the estimated value of the external light intensity is directly regarded as the external light intensity. Therefore, the estimated value of the external light intensity is merely referred to as an "external light intensity" in the description for the shadow recognition mode. In a case of the reflected light recognition mode, the estimated value of the external light intensity is calculated from pixel values of a figure of a finger pad. That is, the estimated value itself does not represent the external light intensity in the reflected light recognition mode. However, the pixel values of the figure of the finger pad increase as the external light intensity increases even in the case of the reflected light recognition mode. Therefore, the estimated value in the reflected light recognition mode reflects the external light intensity. The following description discusses a process performed by the external light intensity calculation section 3, based on the process in the case of the shadow recognition mode.

(b) of Fig. 5 illustrates a relationship between the external light intensity and the histogram created by the external light intensity calculation section 3. In a case where the external light intensity is measured under a condition where a finger is placed on the touch panel section 10 in environments with different external light intensities, the external light intensity calculation section 3 creates different histograms (see (b) of Fig. 5). That is, the pixel value distribution in the histogram is extended toward the higher end as the external light intensity increases. Note in (b) of Fig. 5 that A indicates the external light intensity for a sensor image (3), B indicates the external light intensity for a sensor image (2), and C indicates the external light intensity for a sensor image (1).

Next, the external light intensity is calculated from the histogram thus created, as follows. The number of pixels in the histogram is counted in such a manner that the counting starts from the highest pixel value. When the number reaches a certain (a few) percentage of all the pixels used in the creation of the histogram, a pixel value of the number-th pixel is employed as a value of the external light intensity.

An explanation is given below as to why the pixel value corresponding to the part of the histogram above which part is the top few percent of the histogram is taken as the external light intensity as above. Fig. 6 is a diagram for describing advantage of the process performed by the external light intensity calculation section 3. For example, as illustrated in Fig. 6, the captured image differs depending on how a finger or a hand is placed on, even under an identical external light intensity. The sensor image (1) of Fig. 6 is an image captured when a finger is extended from the left and placed on the touch panel section 10 so that the finger is placed closer to the left edge of the touch panel section 10. The sensor image (2) of Fig. 6 is an image captured when a finger is extended from the left and placed closer to the right edge of the touch panel section 10.

The external light intensity is identical both in the case of capturing the sensor image (1) and in the case of capturing the sensor image (2). However, histograms created from the respective sensor images (1) and (2) are different from each other as illustrated in Fig. 6, because the captured image differs depending on where a finger is placed. Under the circumstances, if a pixel value corresponding to the part of the histogram above which part is the top 50% of the histogram is taken as the external light intensity, then external light intensities calculated from the respective sensor images (1) and (2) of Fig. 6 are largely different from each other. This cannot be considered as accurate. On the other hand, if a pixel value corresponding to the part of the histogram above which part is the top 5% of the histogram is taken as the external light intensity, then external light intensities calculated from the respective sensor images (1) and (2) of Fig. 6 are substantially identical.

For the reason above, it is possible to reduce variation in the value of the external light intensity, which variation occurs due to variation in the position of a finger or a hand, by calculating the external light intensity from the pixel value corresponding to the part of the histogram above which part is the top few percent in the histogram.

However, if the external light intensity is calculated from a pixel value corresponding to the part of the histogram above which part is, for example, the top 0.1% or at a similarly high place in the histogram, the precision may decrease due to defective pixel values in the image from which the external light intensity is calculated. Therefore, the external light intensity is preferably calculated from a pixel value corresponding to the part of the histogram above which part is about the top single-digit percent of the histogram. That is, the pixel whose pixel value is employed as the external light intensity is preferably ranked at less than top 10% of all the selected pixels being arranged in a descending order. In other words, preferably, the external light intensity calculation section 3 employs, as the external light intensity, an output value ranked at a predetermined place in the selected output values which is outputted from the infrared light sensors 12 and is arranged in the descending order, wherein the predetermined place matches a value ranked among less than top 10% of all the selected output values.

Further, the external light intensity calculation section 3 may employ the predetermined place corresponding to the reflected light recognition mode or the shadow recognition mode, which is selected by the recognition process selecting section 5, so as to calculate the estimated value of the external light intensity. In other words, the external light intensity calculation section 3 may employ a predetermined place for the reflected light recognition mode in the case of the reflected light recognition mode, and can employ a predetermined place for the shadow recognition mode in the case of the shadow recognition mode, so as to calculate the estimated value of the external light intensity.

Particularly it is not always preferable that the estimated value of the external light intensity be calculated by using the pixel value ranked among the less than top 10% in the histogram, because in the reflected light recognition mode, as described earlier, the estimated value of the external light intensity is calculated by using the pixel values of the figure of the finger pad when the external light is relatively weak. In view of the circumstances, the reflected light recognition mode may be arranged such that the estimated value of the external light intensity is calculated by using (i) a pixel value corresponding to a part of the histogram above which part is the less than top 10% of the histogram in spite of strong effect of the figure of the finger pad, or (ii) a pixel value corresponding to a part of the histogram above which part is the top several tens percent in the histogram so that the figure of the finger pad causes little effect, in spite of a certain degree of deterioration in precision of the estimated value of the external light intensity.

As described above, the estimated value of the external light intensity is more appropriately calculated by using the predetermined place suitable for each recognition mode.

Fig. 7 is a diagram for describing a variation of the process performed by the external light intensity calculation section 3. The method of the external light intensity calculation section 3 calculating the external light intensity is not limited to those using the histogram. Alternatively, the external light intensity can be calculated as follows. For example, as illustrated in Fig. 7, regions 71 through 75, each of which includes sample points (i.e., pixels), are defined in the captured image. Next, a mean value of the sample points is calculated for each of the regions 71 through 75. Then, the highest mean value among the calculated mean values is employed as the external light intensity. It should be noted in Fig. 7 that pixels represented by unfilled circles, each of which is labeled with reference numeral 76, are non-sample points.

(Advantages of Calculation of External Light Intensity from Infrared Light)

The external light intensity calculation section 3 can calculate the external light intensity by using a visible light image obtained by the visible light sensors 13. However, preferably, the external light intensity calculation section 3 calculates the external light intensity by using an infrared light image obtained by the infrared light sensors 12. The reason thereof is described as follows.

The fluorescent light and dim outside ambient light contain little infrared light. Therefore, a position of the target subject can be detected with little influence from external light when the position detection is performed by making use of the infrared light emitted from the backlight 17 and reflected by the target subject in a room or under the dim outside ambient light. However, as the external light intensity of the infrared light increases, a contrast between the figure of the target subject and a background area becomes weak. This makes it difficult to recognize the figure of the target subject. Under the circumstances, it is preferable to detect the external light intensity of the infrared light so that the reflected light recognition mode is switched to the shadow recognition mode before the figure of the target subject becomes unrecognizable. Accordingly, it is preferable that the external light intensity of the infrared light be estimated in advance.

Also in the shadow recognition mode, the following problem arises. The infrared light more likely passes through a finger or the like than the visible light. Therefore, brightness of the figure of the target subject is affected by the infrared light transmitted the figure or the like, in a case where the position detection is carried out by capturing the shadow of the target subject under an environment where there is a lot of infrared light, such as under the bright external light. This is because the visible light sensors 13 that are sensitive mainly to visible light are more or less sensitive also to infrared light, thereby increasing the pixel values. Under the circumstances, it is possible to improve recognition precision by accurately knowing the external light intensity of the infrared light so as to estimate the brightness (pixel value) of the shadow of the target subject.

For the advantages above, the external light intensity is calculated by using the infrared light image obtained by the infrared light sensors 12, in the present embodiment.

(Detail of Process performed by Recognition Process Selecting Section 5)

The description is given in detail as to the process performed by the recognition process selecting section 5. Fig. 8 is a flowchart illustrating an example of a flow of the process performed by the recognition process selecting section 5. The recognition process selecting section 5 switches between the reflected light recognition mode and the shadow recognition mode according to the estimated value of the external light intensity calculated by the external light intensity calculation section 3. More specifically, the recognition process selecting section 5 determines whether or not the estimated value of the external light intensity outputted from the external light intensity calculation section 3 is less than a predetermined threshold value (S1).

In the case of the reflected light recognition mode, the reflected light becomes unrecognizable when the external light intensity is equal to or greater than the intensity of the light reflected by the finger pad 61 (see Fig. 3), because the contrast between the figure of the finger pad and the background area becomes low. Therefore, it is preferable that the predetermined threshold value be determined in consideration of the maximum value of the external light intensity at which maximum value the reflected light is recognizable.

In a case where the recognition process selecting section 5 determines that the estimated value of the external light intensity is smaller than the predetermined threshold value (YES in S1), the recognition process selecting section 5 turns on the infrared light source in the backlight 17 (S2), and in the meantime, performs settings of parameters for analyzing the captured image (infrared light image) outputted from the infrared light sensors 12 (S3). The settings of the parameters are used for the hereinafter-performed image analyzing processes. Further, the recognition process selecting section 5 outputs, to the in-touch/non-touch distinguishing threshold pixel value calculation section 6, an instruction for calculating the in-touch/non-touch distinguishing threshold pixel value by using the infrared light image (S4). As described above, the recognition process selecting section 5 selects the reflected light recognition mode in a case where the estimated value of the external light intensity is smaller than the predetermined threshold value.

On the other hand, in a case where the recognition process selecting section 5 determines that the estimated value of the external light intensity is equal to or greater than the predetermined threshold value (NO in S1), the recognition process selecting section 5 turns off the infrared light source of the backlight 17 (S5), and in the meantime, performs settings of parameters for analyzing the captured image (visible light image) outputted from the visible light sensors 13. The settings of the parameters are used for the hereinafter-performed image analyzing processes. Further, the recognition process selecting section 5 outputs, to the in-touch/non-touch distinguishing threshold pixel value calculation section 6, an instruction for calculating the touch/non-touch threshold value by using the visible light image (S7). As described above, the recognition process selecting section 5 selects the shadow recognition mode in a case where the estimated value of the external light intensity is equal to or greater than the predetermined threshold value. Although a position of the figure of the pointing member is detected by using the visible light image in the shadow recognition mode, the infrared light image can also be used in a case where the external light contains a lot of infrared light.

(Switching Mode of Backlight 17)

The description is given as to a state of the backlight 17 in cases of the reflected light recognition mode and the shadow recognition mode. Fig. 9 illustrates states of the backlight 17 in the reflected light recognition mode and in the shadow recognition mode.

As illustrated in (a) of Fig. 9, both an infrared light backlight and a visible light backlight are in an ON state in the reflected light recognition mode. In this state, infrared light reflected by a finger pad enters the light sensor-containing LCD 11. In the meantime, visible light and infrared light, which attribute to the external light, also enter the light sensor-containing LCD 11.

In contrast, as illustrated in (b) of Fig. 9, the infrared light backlight is in an OFF state in the shadow recognition mode. In this state, the visible light and the infrared light, which attribute mainly to the external light, enter the light sensor-containing LCD 11.

(Method of Switching Between Reflected Light Recognition and Shadow Recognition)

In order to prevent a frequent switching between the reflected light recognition mode and the shadow recognition mode due to a slight change in the external light intensity, a switching point to the reflected light recognition mode and a switching point to the shadow recognition mode are preferably set to exhibit hysteresis. This configuration is described with reference to Fig. 10 . Fig. 10 illustrates how the reflected light recognition mode and the shadow recognition mode are switched over.

As illustrated in Fig. 10, a predetermined space is given between the switching point to the reflected light recognition mode and the switching point to the shadow recognition mode. In other words, (i) a reference level of the estimated value of the external light intensity at which reference level the shadow recognition mode is switched to the reflected light recognition mode and (ii) a reference level of the estimated value of the external light intensity at which reference level the reflected light recognition mode is switched to the shadow recognition mode are different from each other. This makes it possible to prevent the frequent switching between the reflected light recognition mode and the shadow recognition mode.

It should be noted here that the switching point to the shadow recognition mode is set so that its reference level of the estimated value of the external light intensity is greater than that of the switching point to the reflected light recognition mode. This makes it possible to broaden a range within which the reflected light recognition mode is selected. The reflected light recognition mode is given higher priority than the shadow recognition mode because in the shadow recognition mode, the figure of the finger may be unrecognizable depending on how the finger is placed or how the shadow is made. Preferably, the light intensity of the infrared light backlight has high intensity so as to broaden the range of the external light intensities within which range the reflected light recognition mode is selected.

(Example of Captured Image)

Examples of captured images in the reflected light recognition mode and in the shadow recognition mode are described below. Fig. 11 conceptually illustrates examples of the captured images in the reflected light recognition mode. In Fig. 11, (a) (NO LIGHT), (c) (FLUORESCENT LIGHT), (e) (INCANDESCENT LAMP), and (g) (SUNLIGHT) respectively indicate types of the light sources used when the figure of the finger is captured, whereas (b), (d), (f), and (h) indicate examples of the captured images corresponding to (a), (c), (e), and (g), respectively.

The infrared light emitted from the backlight 17 is reflected by a part, of a finger (finger pad), which touches the light sensor-containing LCD 11, and then the infrared light thus reflected enters the infrared light sensors 12. In a case where the external light contains little infrared light, the figure of the finger pad looks white brighter than the background area (see (b) and (d) of Fig. 11). In a case where the external light contains a lot of infrared light, the figure of the finger pad becomes difficult to recognize (see (f) and (h) of Fig. 11).

Fig. 12 conceptually illustrates examples of captured images in the shadow recognition mode. In Fig. 12, (a) (NO LIGHT), (c) (FLUORESCENT LIGHT), (e) (INCANDESCENT LAMP), and (g) (SUNLIGHT) respectively indicate types of the light sources used when the figure of the finger is captured, whereas (b), (d), (f), and (h) indicate examples of the captured images corresponding to (a), (c), (e), and (g), respectively.

In the shadow recognition mode, the shadow made by the finger shutting out the external light is captured by the visible light sensors 13. In a case where there is no external light, the shadow of the finger pad is not captured (see (b) of Fig. 12). In a case where the external light is relatively intense, the figure of the finger pad is captured as a black spot (see (d), (f), and (h) of Fig. 11).

(Detail of Process performed by In-touch/non-touch Distinguishing Threshold Pixel Value Calculation Section 6)

(Examples of In-touch/non-touch Captured Images)

Fig. 13 illustrates what images are obtained when capturing figures of an in-touch finger and a non-touch finger in the reflected light recognition mode. When the infrared light is emitted from the backlight 17 with nothing placed (e.g., there is no finger placed) on the light sensor-containing LCD 11, an image including no figure of the finger pad (i.e., an image of background area only) is obtained (see condition (1) of Fig. 13). When the infrared light is emitted from the backlight 17 with a finger 60 being positioned above (close to) the light sensor-containing LCD 11 but without making contact with the light sensor-containing LCD 11, an image including a barely recognizable figure 83 of the finger pad is obtained (see condition (2) of Fig. 13). When the infrared light is emitted from the backlight 17 with the finger 60 being completely in contact with the light sensor-containing LCD 11, an image including a clearly recognizable figure 84 of the finger pad is obtained.

Fig. 14 illustrates what images are obtained when capturing figures of the in-touch finger and the non-touch finger in the shadow recognition mode. When external light 81 directly enters the infrared light sensors 12 or the visible light sensors 13 with nothing placed (e.g., there is no finger placed) on the light sensor-containing LCD 11, an image including no figure of the finger pad (i.e., an image of background area only) is obtained (see condition (1) of Fig. 14). When external light 82 enters the infrared light sensors 12 or the visible light sensors 13 with the finger 60 being positioned above (close to) the light sensor-containing LCD 11 but without making contact with the light sensor-containing LCD 11, an image including a barely recognizable shadow 85 of the finger pad is obtained because the finger 60 shuts out the external light 82 (see condition (2) of Fig. 14). When the external light 81 enters the infrared light sensors 12 or the visible light sensors 13 with the finger being completely in contact with the light sensor-containing LCD 11, an image including a shadow 86 of the finger pad, which is more recognizable than that of the condition (2), is obtained (see condition (3) of Fig. 14).

(Relationship between In-touch/non-touch Pixel Values)

Next, Fig. 15 illustrates a relationship among (i) the external light intensity calculated by the external light intensity calculation section 3, (ii) a pixel value below a non-touch finger pad on the image under the condition (2) of Fig. 13, and (iii) a pixel value below an in-touch finger pad (i.e., a finger pad touching the display panel) on the image below the condition (3) of Fig. 13, in a case of the reflected light recognition mode. As illustrated in (a) of Fig. 15, a pixel value of the background area of the captured image (indicated by reference numeral 91), a pixel value below the in-touch finger pad on the image (indicated by reference numeral 92), and a pixel value below the non-touch finger pad on the image (indicated by reference numeral 93) become greater as the external light intensity becomes higher (brighter). Captured images at this time are respectively illustrated in (b) of Fig. 15.

As illustrated in (a) of Fig. 15, there is such a relationship that the pixel value below the in-touch finger pad is always greater than the pixel value below the non-touch finger pad. Thus, there is always a gap between the pixel value below the in-touch finger pad and the pixel value below the non-touch finger pad.

Since this relationship exists, as illustrated in (a) of Fig. 16, it is possible to set a threshold value (indicated by reference numeral 104) between the pixel value below a non-touch finger pad (indicated by reference numeral 102) and the pixel value below an in-touch finger pad (indicated by reference numeral 101). Such a threshold value is referred to as an in-touch/non-touch distinguishing threshold pixel value. The precision in recognition of a finger can be improved by removing a pixel value smaller than the threshold value (i.e., by removing unnecessary information). Note that, (a) to (d) of Fig. 16 are graphs showing a relationship among (i) a pixel value below a non-touch finger pad, (ii) a pixel value below an in-touch finger pad, (iii) an in-touch/non-touch distinguishing threshold pixel value, and (iv) an unnecessary information-distinguishing threshold pixel value according to which unnecessary information is removed, in the reflected light recognition mode.

Note that, for the sake of easy explanation, in the graphs of Fig. 16, each pixel value is 0 in a case where the external light intensity is 0.

Further, a pixel having a pixel value greater than a pixel value 101 below the in-touch finger pad probably results from incoming of unnecessary intense external light. In order to prevent unnecessary intense external light from deteriorating precision in recognition of the figure of the finger pad, it is preferable to remove information of pixels whose pixel values are greater than an assumed pixel value below the in-touch finger pad. A threshold value indicated by reference numeral 103 is a threshold value for changing pixel values of unnecessary pixels which pixel values are greater than a pixel value below an in-touch finger pad. Such a threshold value is referred to as an unnecessary information-distinguishing threshold pixel value according to which unnecessary information is removed.

Note that, in the case of the reflected light recognition mode, the unnecessary information-distinguishing threshold pixel value according to which unnecessary information is removed is an upper limit of a range of pixel values used to recognize the captured image, and the in-touch/non-touch distinguishing threshold pixel value is a lower limit of the above range.

Fig. 17 illustrates a relationship among (i) the external light intensity calculated by the external light calculation section 3, (ii) a pixel value below the non-touch finger pad on the image under the condition (2) in Fig. 14 and (iii) a pixel value below the in-touch finger pad on the image under the condition (3) in Fig. 14, in the case of the shadow recognition mode. As illustrated in (a) of Fig. 17, a pixel value of the background area of the captured image (indicated by reference numeral 94), a pixel value below a non-touch finger pad (indicated by reference numeral 95), and a pixel value below an in-touch finger pad (indicated by reference numeral 96) become greater as the external light intensity becomes higher (brighter). Images captured in this case are respectively illustrated in (b) of Fig. 17.

As illustrated in (a) of Fig. 17, there is such a relationship that a pixel value below the non-touch finger pad is always greater than a pixel value below the in-touch finger pad, so that a gap always exists between the pixel value below the non-touch finger pad and the pixel value below the in-touch finger pad.

Since this relationship exists, as illustrated in (a) of Fig. 18, it is possible to set a threshold value (indicated by reference numeral 113) between a pixel value below a non-touch finger pad (indicated by reference numeral 111) and a pixel value below an in-touch finger pad (indicated by reference numeral 112). As in the case of the reflected light recognition mode, such a threshold value is referred to as an in-touch/non-touch distinguishing threshold pixel value. A pixel value greater than the threshold value can be removed as unnecessary information which is information unnecessary in performing the recognition. By performing the recognition without such unnecessary information, recognition precision can be improved. Note that, (a) to (d) of Fig. 18 are graphs showing a relationship among (i) a pixel value below a non-touch finger pad, (ii) a pixel value below an in-touch finger pad, (iii) an in-touch/non-touch distinguishing threshold pixel value, and (iv) an unnecessary information-distinguishing threshold pixel value according to which unnecessary information is removed, in the shadow recognition mode.

Further, a pixel having a pixel value smaller than the pixel value 112 below an in-touch finger pad probably results from unnecessary shadow. In order to prevent the unnecessary shadow from deteriorating precision in recognition of a figure of the finger pad, it is preferable to remove information of unnecessary pixels having pixel values smaller than an assumed pixel value below the in-touch finger pad. A threshold value indicated by reference numeral 114 is a threshold value for changing a pixel value, of a pixel, which is unnecessary pixel value that is smaller than the pixel value below the in-touch finger pad. Such a threshold value is referred to as an unnecessary information-distinguishing threshold pixel value according to which unnecessary information is removed.

Note that, in the case of the shadow recognition mode, the unnecessary information-distinguishing threshold pixel value according to which unnecessary information is removed is a lower limit of a range of pixel values used to recognize the captured image, and the in-touch/non-touch distinguishing threshold pixel value is an upper limit of the above range.

Based on the aforementioned technical concept, an in-touch/non-touch distinguishing threshold pixel value calculation section 6 dynamically calculates the in-touch/non-touch distinguishing threshold pixel value and the unnecessary information-distinguishing threshold pixel value according to which unnecessary information is removed, according to the changing external light intensity.

However, at the time of online processing (when the user actually touches the light sensor-containing LCD 11), the pixel value below the in-touch finger pad and the pixel value below the non-touch finger pad cannot be obtained. Therefore, an equation indicating a relationship between (i) the estimated value of the external light intensity which can be obtained on the spot and (ii) the in-touch/non-touch distinguishing threshold pixel value is set in advance, and the estimated value of the external light intensity is substituted into this equation, thereby calculating the in-touch/non-touch distinguishing threshold pixel value.

An example of this equation is the following equation (1). It is possible to calculate an in-touch/non-touch distinguishing threshold pixel value (T) by substituting, into this equation, an estimated value (A) of external light intensity which has been calculated by the external light intensity calculation section 3.

$$T = AX \cdots (1)$$

X in equation (1) is a constant number calculated in advance. In order to calculate X, first, a value of N is set so as to satisfy the following equation (2).

$$T = (B+C)/N \cdots (2)$$

In equation (2), B represents a pixel value below a non-touch finger pad, and C represents a pixel value below an in-touch finger pad. N represents any number so that T is between B and C.

Further, based on equation (2), X is calculated so as to satisfy equation (3).

$$T = AX = (B+C)/N \cdots (3)$$

At the time of online processing, the in-touch/non-touch distinguishing threshold pixel value calculation section 6 substitutes A, calculated by the external light intensity calculation section 3 for each frame, into equation (1), thereby calculating T.

Note that, equation (1) can be stored in a memory storage section which can be used by the in-touch/non-touch distinguishing threshold pixel value calculation section 6, for example, in a memory storage section 40. Also, the in-touch/non-touch distinguishing threshold pixel value calculation section 6 can use different equations for calculating the in-touch/non-touch distinguishing threshold pixel value in the shadow recognition mode and in the reflected light recognition mode.

Also as to the unnecessary information-distinguishing threshold pixel value according to which unnecessary information is removed, an equation indicating a relationship between the estimated value of the external light intensity and the unnecessary information-distinguishing threshold pixel value according to which unnecessary information is removed is set in advance, and the estimated value of the external light intensity is substituted into this equation, thereby calculating the unnecessary information-distinguishing threshold pixel value according to which unnecessary information is removed. Further, the in-touch/non-touch distinguishing threshold pixel value calculation section 6 can use different equations for calculating the unnecessary information-distinguishing threshold pixel value according to which unnecessary information is removed in the shadow recognition mode and in the reflected light recognition mode. That is, the in-touch/non-touch distinguishing threshold pixel value calculation section 6 can use at least one equation selected from a plurality of predetermined equations to calculate the in-touch/non-touch distinguishing threshold pixel value and the unnecessary information-distinguishing threshold pixel value according to which unnecessary information is removed, in such a way that the predetermined equations are selectively used according to which recognition mode is selected by the recognition process selecting section 5.

Each of (b) to (d) of Fig. 16 and (b) to (d) of Fig. 18 is a graph showing another example of changes in pixel values below an in-touch finger pad and non-touch finger pad versus changes in ambient lighting intensity. As illustrated in (b) of Fig. 16 and (b) of Fig. 18, an equation for calculating the in-touch/non-touch distinguishing threshold pixel value and an equation for calculating the unnecessary information-distinguishing threshold pixel value according to which unnecessary information is removed can indicate curves respectively.

Further, in a case where properties of pixel values below an in-touch finger pad and non-touch finger pad change at a branch point (a point at which external light intensity reaches a certain pixel value) as illustrated in (c) and (d) of Fig. 16 and (c) and (d) of Fig. 18 in calculating the in-touch/non-touch distinguishing threshold pixel value and the unnecessary information-distinguishing threshold pixel value according to which unnecessary information is removed, the equation for calculating the in-touch/non-touch distinguishing threshold pixel value and the equation for calculating the unnecessary information-distinguishing threshold pixel value according to which unnecessary information is removed can be changed at the branch point.

That is, two types (or three or more types) of different equations for calculating the in-touch/non-touch distinguishing threshold pixel value (or the unnecessary information-distinguishing threshold pixel value according to which unnecessary information is removed) can be stored in the memory storage section 40, and the in-touch/non-touch distinguishing threshold pixel value calculation section 6 can selectively use the two types (or three or more types) of different equations before and after the external light intensity calculated by the external light intensity calculation section 3 reaches a predetermined value. In other words, the in-touch/non-touch distinguishing threshold pixel value calculation section 6 can selectively use a plurality of predetermined equations for calculating the in-touch/non-touch distinguishing threshold pixel value and a plurality of predetermined equations for calculating the unnecessary information-distinguishing threshold pixel value according to which unnecessary information is removed value, according to the estimated value of the external light intensity calculated by the external light intensity calculation section 3.

The two types of different equations are, for example, equations different from each other in the constant number X of the equation (1).

Further, the in-touch/non-touch distinguishing threshold pixel value may be substantially equal to the pixel value below the in-touch finger pad. In this case, the constant number X of the equation (1) can be determined so that the in-touch/non-touch distinguishing threshold pixel value is substantially equal to the pixel value below the in-touch finger pad.

Note that, the in-touch/non-touch distinguishing threshold pixel value calculation section 6 does not have to calculate both the in-touch/non-touch distinguishing threshold pixel value and the unnecessary information-distinguishing threshold pixel value according to which unnecessary information is removed, and can calculate only the in-touch/non-touch distinguishing threshold pixel value. If unnecessary information is removed by using at least the in-touch/non-touch distinguishing threshold pixel value, it is possible to improve precision in discriminating the touch and the non-touch from each other.

(Detail of Process performed by Unnecessary Information Removal Section 7)

The in-touch/non-touch distinguishing threshold pixel value and unnecessary information-distinguishing threshold pixel value according to which unnecessary information is removed thus calculated are outputted to the unnecessary information removal section 7. In the shadow recognition mode, the unnecessary information removal section 7 deals with a visible light image. The unnecessary information removal section 7 removes, from the visible light image, the information unnecessary in recognizing the pointing member. The unnecessary information removal section 7 performs the removal of the unnecessary information by carrying out the following operations (i) and (ii) for the pixels in the captured image. In the operation (i), the pixel values greater than the in-touch/non-touch distinguishing threshold pixel value obtained by the in-touch/non-touch distinguishing threshold pixel value calculation section 6 are replaced with the in-touch/non-touch distinguishing threshold pixel value by the unnecessary information removal section 7. In the operation (ii), the pixel values smaller than the unnecessary information-distinguishing threshold pixel value according to which unnecessary information is removed is replaced with the unnecessary information-distinguishing threshold pixel value according to which unnecessary information is removed by the unnecessary information removal section 7.

Meanwhile, in the reflected light recognition mode, the unnecessary information removal section 7 deals with an infrared light image. The unnecessary information removal section 7 performs the removal of the unnecessary information by carrying out the following operations (i) and (i) for the pixels in the captured image. In the operation (i), the pixel values smaller than the in-touch/non-touch distinguishing threshold pixel value obtained by the in-touch/non-touch distinguishing threshold pixel value calculation section 6 is replaced with the in-touch/non-touch distinguishing threshold pixel value by the unnecessary information removal section 7. In the operation (ii), the pixel values greater than the unnecessary information-distinguishing threshold pixel value according to which unnecessary information is removed is replaced with the unnecessary information-distinguishing threshold pixel value according to which unnecessary information is removed by the unnecessary information removal section 7.

That is, the unnecessary information removal section 7 removes information unnecessary in recognizing the pointing member by (i) replacing the pixel values, for the pixels in the captured image, which are greater than an upper limit of a range of pixel values used to recognize the target subject, with the upper limit and (ii) replacing the pixel values, for the pixels in the captured image, which are smaller than a lower limit of the above range with the lower limit.

Fig. 19 is a table for explaining a process performed by the unnecessary information removal section 7 in the case of the shadow recognition mode. The relationship between pixel values of the background area and pixel values below the finger pad is shown at the bottom of Fig. 19.

That is, in the case of the shadow recognition mode, the pixels having pixel values greater than the in-touch/non-touch distinguishing threshold pixel value can be safely considered as not being related to the formation of the figure of the pointing member touching the light sensor-containing LCD 11. Therefore, as illustrated in Fig. 19, replacing the pixel values, for the pixels, which are greater than the in-touch/non-touch distinguishing threshold pixel value with the in-touch/non-touch distinguishing threshold pixel value removes an unnecessary figure from the background of the pointing member.

In the case of the reflected light recognition mode, the pixels contrary having pixel values smaller than the in-touch/non-touch distinguishing threshold pixel value can be safely considered as not being related to the formation of the figure of the pointing member touching the light sensor-containing LCD 11. Therefore, replacing the pixel values, for the pixels, which are smaller than the in-touch/non-touch distinguishing threshold pixel value with the in-touch/non-touch distinguishing threshold pixel value removes the unnecessary figure from the background of the pointing member.

Note that, how the unnecessary information removal section 7 changes the captured image is not limited to the aforementioned ones. For example, the unnecessary information removal section 7 can change the pixel values to maximum values (white) so that pixel values unnecessary in recognizing the pointing member saturate in the case of the shadow recognition mode, and change the pixel values to minimum values (black) so that pixel values unnecessary in recognizing the pointing member saturate in the case of the reflected light recognition mode.

(Detail of Process performed by Optimal Sensitivity Calculation Section 4)

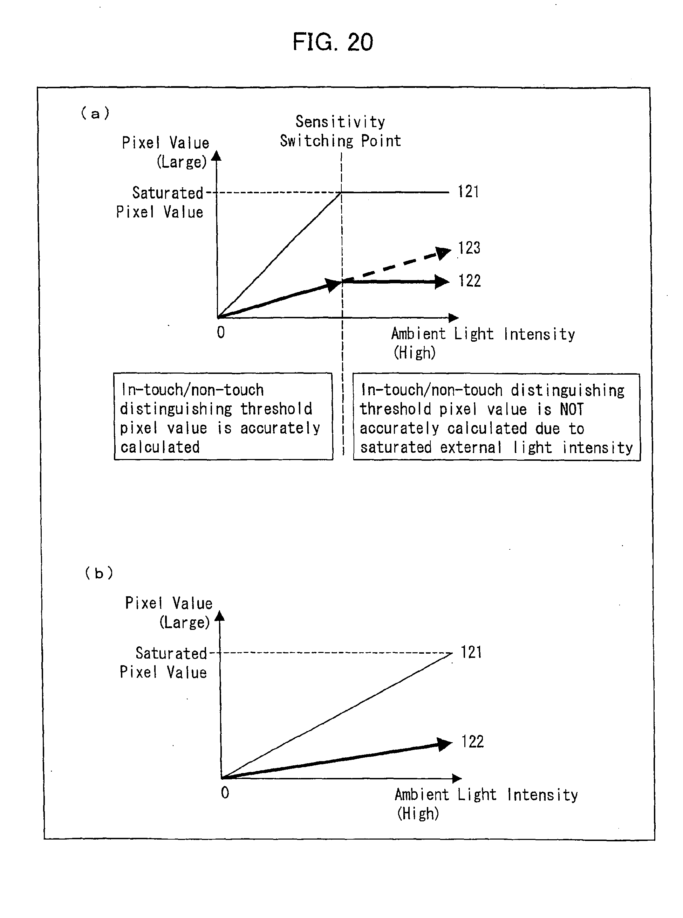

Fig. 20 illustrates a problem arising in a case where the external light intensity saturates in the shadow recognition mode, and a solution to the problem.

The aforementioned process performed for each frame allows a touch position to be appropriately detected. However, as illustrated in (a) of Fig. 20, in a case where the external light intensity (indicated by reference numeral 121) greatly increases and the external light intensity calculated reaches a saturated pixel value in the shadow recognition mode, it is impossible to calculate what level the external light intensity has increased when external light further increases.

Thus, it becomes impossible to accurately calculate the in-touch/non-touch distinguishing threshold pixel value, which is calculated from the external light intensity. If the worst happens, even when a finger is placed on a panel, all the pixels saturate, so that the image is entirely white. In (a) of Fig. 20, the in-touch/non-touch distinguishing threshold pixel value calculated by the in-touch/non-touch distinguishing threshold pixel value calculation section 6 in a case where the external light intensity reaches the saturated pixel value is indicated by reference numeral 122, and the in-touch/non-touch distinguishing threshold pixel value calculated in a case where the external light intensity does not reach the saturated pixel value is indicated by reference numeral 123.

In order to solve the problem, it is necessary to prevent saturation of the external light intensity as illustrated in (b) of Fig. 20 by reducing sensitivities of the infrared light sensors 12 and the visible light sensors 13. The process for reducing the sensitivities prevents saturation of the external light intensity, so that it is possible to accurately calculate the in-touch/non-touch distinguishing threshold pixel value. The sensitivities of the infrared light sensors 12 and the visible light sensors 13 are turned down at a time when the external light intensity saturates ("Sensitivity Switching Point" in (a) of Fig. 20) or just before this time.

Further, pixel values for a shadow of a finger may saturate before the external light intensity saturates. Therefore, the sensitivities of the infrared light sensors 12 and the visible light sensors 13 may be turned down at a time when pixel values for a figure of the shadow of the target subject in the captured image saturate or just before this time.

The optimal sensitivity calculation section 4 calculates a sensitivity optimal for recognition of a pointing member according to the external light intensity calculated by the external light intensity calculation section 3, and causes the sensitivity adjusting section 16 to adjust the sensitivities of the infrared light sensors 12 and the visible light sensors 13 so that an optimal captured image can be obtained.

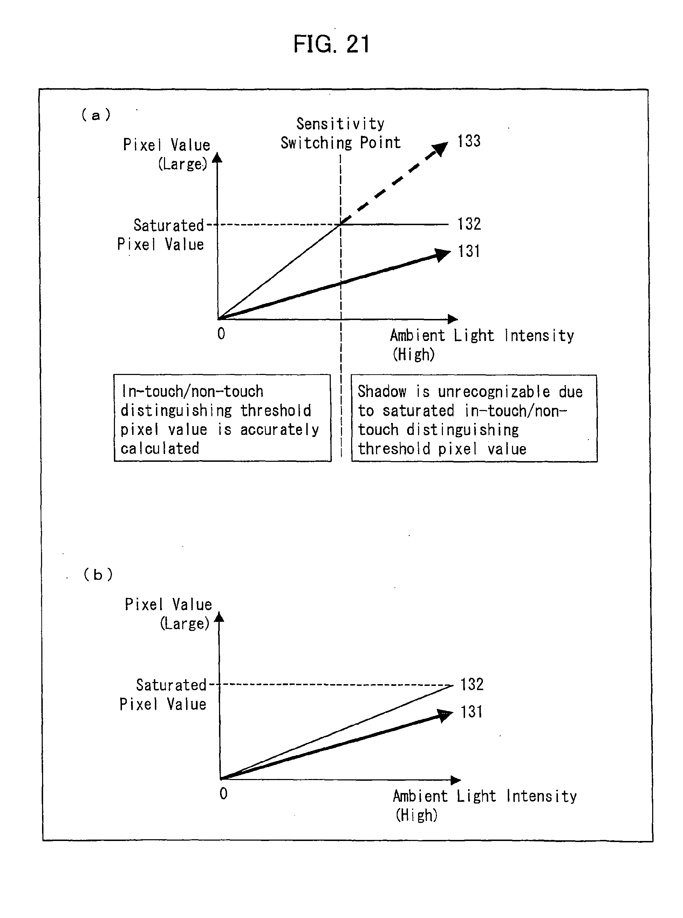

Fig. 21 illustrates a problem arising in a case where the in-touch/non-touch distinguishing threshold pixel value saturates in the reflected light recognition mode and a solution to the problem.

When the estimated value of the external light intensity (indicated by reference numeral 131) reaches a predetermined value in the case of the reflected light recognition mode as illustrated in (a) of Fig. 21, an in-touch/non-touch distinguishing threshold pixel value (indicated by reference numeral 132) reaches the saturated pixel value. In (a) of Fig. 21, an (original) in-touch/non-touch distinguishing threshold pixel value in a case where the saturation does not occur is indicated by reference numeral 133.

In order to solve the problem, it is necessary to prevent the saturation of the in-touch/non-touch distinguishing threshold pixel value as illustrated in (b) of Fig. 21 by reducing the sensitivities of the infrared light sensors 12 and the visible light sensors 13. The process for reducing the sensitivities prevents the saturation of the in-touch/non-touch distinguishing threshold pixel value, so that it is possible to accurately calculate the in-touch/non-touch distinguishing threshold pixel value. The sensitivities of the infrared light sensors 12 and the visible light sensors 13 are turned down at a time when the in-touch/non-touch distinguishing threshold pixel value saturates ("Sensitivity Switching Point" in (a) of Figure 21) or just before this time.

That is, the optimal sensitivity calculation section 4 causes the sensitivity adjusting section 16 to adjust the sensitivities of the infrared light sensors 12 and the visible light sensors 13 so that the in-touch/non-touch distinguishing threshold pixel value calculated by the in-touch/non-touch distinguishing threshold pixel value calculation section 6 does not saturate.

With this configuration, it is possible to adjust the sensitivity of the infrared light sensors 12 so that a captured image which is optimal for recognition of the pointing member can be obtained in the reflected light recognition mode.

(Example of Sensitivity Switching Process)

Fig. 22 illustrates examples of captured images in a case where the sensitivity switching is carried out and examples of captured images in a case where the sensitivity switching is not carried out, in the shadow recognition mode. An upper part of Fig. 22 illustrates the case where the sensitivity switching is not carried out. In the case where the sensitivity switching is not carried out, a pixel value below a finger pad as well as the background pixel value becomes greater, due to light transmitting the finger, as external light intensity becomes greater. Lastly, all the pixels saturate, so that the image becomes entirely white. It is impossible to precisely detect the touch position in such an image.

In contrast, a lower part of Fig. 22 illustrates that in the case where the sensitivity switching is carried out, a captured image is kept at a state where the touch position can be detected even if the external light intensity is at the same level as that in the case where the sensitivity switching is not carried out. This is because the sensitivity is reduced by the sensitivity switching so that the background pixel value and the pixel value below a finger pad do not saturate.

The following describes, as an example of the process performed by the optimal sensitivity calculation section 4, the process for switching the sensitivity of the infrared light sensors 12 from 1/1 to 1/4 in stages, in reference to Fig. 23. Fig. 23 illustrates an exemplary sensitivity switching process performed by the optimal sensitivity calculation section 4.

First, an example of a case where the sensitivity is reduced is described below. When the external light intensity reaches the saturated pixel value, i.e., 255 at sensitivity 1/1, a sensitivity DOWN (decrease) process is carried out, so that the sensitivity becomes 1/2. Here, the external light intensity that would be calculated as 255 at the sensitivity 1/1 is calculated as half of 255, i.e., 128, due to a change of the sensitivity into 1/2. When the external light intensity at the sensitivity 1/2 reaches the saturated pixel value, i.e., 255, the sensitivity becomes 1/4 due to the sensitivity DOWN process, so that the external light intensity that would be calculated as 255 at the sensitivity 1/2 is calculated as 128 at the sensitivity 1/4.

Next, an exemplary case of increasing the sensitivity is described. In a case where the external light intensity at the sensitivity 1/4 decreases from the saturated pixel value, i.e., 255, to 64 or lower which is about 1/4 of 255, a sensitivity UP (increase) process is carried out so as to restore the sensitivity to 1/2. The external light intensity that would be calculated as 64 at the sensitivity 1/4 is calculated as 128 at the sensitivity 1/2. In a case where the external light intensity at the sensitivity 1/2 decreases to about 1/4 of the saturated pixel value, i.e., 64 or lower, the sensitivity UP process allows the sensitivities of the infrared light sensors 12 and the visible light sensors 13 to be restored to the sensitivity 1/1.

Since the external light intensity saturates at 255, in a case where the external light intensity further increases, it is impossible to calculate what level the external light intensity has increased. Thus, in the case of the sensitivity DOWN process, the sensitivity is preferably reduced sequentially from 1/1 to 1/2 and 1/4. However, in a case of the sensitivity UP process, the external light intensity does not saturate, so that the sensitivity can jump from 1/4 to 1/1. For example, in Fig. 23, in a case where the external light intensity at the sensitivity 1/4 rapidly decreases from the vicinity of 128 to 32 or lower, the sensitivity can be increased to 1/1, instead of 1/2.

That is, the optimal sensitivity calculation section 4 sets the sensitivities of the infrared light sensors 12 and the visible light sensors 13 in stages according to the estimated value of the external light intensity. In a case where the estimated value of the external light intensity is smaller than or equal to a predetermined reference level, the sensitivities of the infrared light sensors 12 and the visible light sensors 13 are increased at once so that the increment corresponds to plural stages. Note that, the number of stages in setting the sensitivity is not limited to 3, and can be 2 and 4 or more.

In order that the sensitivity UP process and the sensitivity DOWN process may not be frequently switched over in response to a slight change in the external light intensity, a sensitivity DOWN point is set to 255 (this becomes 128 after the sensitivity DOWN process), and a sensitivity UP point is set to 64 (this becomes 128 after the sensitivity UP process). Under this condition, hysteresis is given. In other words, when the external light intensity reaches a first reference level (e.g., 255) with the sensitivities of the infrared light sensors 12 and the visible light sensors 13 being set to a first sensitivity (e.g., sensitivity 1/1), the optimal sensitivity calculation section 4 reduces the sensitivities of the infrared light sensors 12 and the visible light sensors 13 from the first sensitivity to a second sensitivity (e.g., sensitivity 1/2) that is smaller than the first sensitivity. When the external light intensity decreases to a second reference level (e.g., 64) with the sensitivities of the infrared light sensors 12 and the visible light sensors 13 being set to the second sensitivity, the optimal sensitivity calculation section 4 increases the sensitivities of the infrared light sensors 12 and the visible light sensors 13 from the second sensitivity to the first sensitivity. It is preferable that the second reference level be smaller, by a predetermined value, than the external light intensity (e.g., 128), which is external light intensity corresponding to the first reference level and is detected by the infrared light sensors 12 and the visible light sensors 13 whose sensitivities are set to the second sensitivity. This predetermined value can be suitably set by person skilled in the art.

Note that, the first and second reference levels can be stored in a memory storage section which can be used by the optimal sensitivity calculation section 4.

By increasing and reducing the sensitivities of the infrared light sensors 12 and the visible light sensors 13 according to the external light intensity as above, it is possible to adjust a dynamic range of an image to an optimal value, thereby carrying out the recognition process with an optimal image. The foregoing description is given as to the case of the shadow recognition mode, but the same technical concept is applicable to the reflected light recognition mode. In the case of the reflected light recognition mode, the optimal sensitivity calculation section 4 has only to adjust the sensitivities of the infrared light sensors 12 and the visible light sensors 13 according to the estimated value of the external light intensity so that the in-touch/non-touch distinguishing threshold pixel value does not saturate.

(Flow of Process performed by Touch Position Detection Device 1)

The description is given below, in reference to Fig. 24, as to an example of a flow of a touch position detection performed by the touch position detection device 1. Fig. 24 is a flowchart depicting an exemplary touch position detection performed by the touch position detection device 1.

First, the infrared light sensors 12 and the visible light sensors 13 in the light sensor-containing LCD 11 capture an image of the pointing member. An infrared light image which is an image captured by the infrared light sensors 12 and a visible light image which is an image captured by the visible light sensors 13 are outputted, via the AD converter 14, to the image adjusting section 2 (S11).

Note that, it can be so arranged that the light sensor-containing LCD 11 captures only an infrared light image in a case of the reflected light recognition mode and captures only a visible light image in a case of the shadow recognition mode.

The image adjusting section 2, upon receiving the infrared light image and the visible light image, performs calibration (adjustment of the gain and offset of the captured image), and then stores the infrared light image and the visible light image thus adjusted to the memory storage section 40 as well as outputs the infrared light image thus adjusted to the external light intensity calculation section 3 (S12).

The external light intensity calculation section 3 calculates, upon receiving the infrared light image, the estimated value of the external light intensity as described earlier (external light intensity calculation step), and then outputs the estimated value of the external light intensity thus calculated to the optimal sensitivity calculation section 4, the recognition process selecting section 5, and the in-touch/non-touch distinguishing threshold pixel value calculation section 6 (S13).

The recognition process selecting section 5 determines, upon receiving the estimated value of the external light intensity from the external light intensity calculation section 3, whether or not the estimated value is less than a predetermined threshold value. Then, the recognition process selection section 5 determines, based on the result of the determination, which one of the reflected light recognition mode and the shadow recognition mode is selected (S14).

In a case of selecting the reflected light recognition mode, the recognition process selecting section 5 causes the backlight control section 15 to turn on an infrared light source of the backlight 17, and instructs the in-touch/non-touch distinguishing threshold pixel value calculation section 6 to calculate an in-touch/non-touch distinguishing threshold pixel value corresponding to the reflected light recognition mode (S15).

In a case of selecting the shadow recognition mode, the recognition process selecting section 5 causes the backlight control section 15 to turn off the infrared light source of the backlight 17, and instructs the in-touch/non-touch distinguishing threshold pixel value calculation section 6 to calculate an in-touch/non-touch distinguishing threshold pixel value corresponding to the shadow recognition mode (S15). The recognition mode selected as above is employed for an image to be captured in the next frame.

Meanwhile, the optimal sensitivity calculation section 4 calculates an optimal sensitivity for recognizing the pointing member according to the estimated value of the external light intensity calculated by the external light intensity calculation section 3, and then outputs the optimal sensitivity to the sensitivity adjusting section 16 (S16). The sensitivity adjusting section 16 adjusts the sensitivity of each of the infrared light sensors 12 and the visible light sensors 13 so that the sensitivity matches the optimal sensitivity outputted from the optimal sensitivity calculation section 4. The sensitivities adjusted as above are employed for an image to be captured in the next frame.

Next, the in-touch/non-touch distinguishing threshold pixel value calculation section 6 calculates the in-touch/non-touch distinguishing threshold pixel value, from the estimated value of the external light intensity calculated by the external light intensity calculation section 3, through an equation corresponding to the recognition mode indicated by the instruction outputted from the recognition process selecting section 5, and then outputs the in-touch/non-touch distinguishing threshold pixel value thus calculated to the unnecessary information removal section 7 (S17). Here, the in-touch/non-touch distinguishing threshold pixel value calculation section 6 can further calculate an unnecessary information-distinguishing threshold pixel value according to which unnecessary information is removed and output the unnecessary information-distinguishing threshold pixel value according to which unnecessary information is removed thus calculated to the unnecessary information removal section 7.

The unnecessary information removal section 7, upon receiving the in-touch/non-touch distinguishing threshold pixel value, obtains from the memory storage section 40 a captured image corresponding to the recognition mode selected by the recognition process selecting section 5. That is, the unnecessary information removal section 7 obtains a visible light image in the case of the shadow recognition mode and obtains an infrared light image in the case of the reflected light recognition mode. Further, for example in the case of the shadow recognition mode, the unnecessary information removal section 7 processes the captured image so that the information unnecessary in recognizing the pointing member (in other words, information on the background of the pointing member) is removed from the captured image by processing the pixel values for pixels in the captured image in such a manner that pixel values greater than the in-touch/non-touch distinguishing threshold pixel value are replaced with the in-touch/non-touch distinguishing threshold pixel value (S18). Here, the unnecessary information removal section 7 can remove information in a captured image, which information is unnecessary in recognizing the pointing member, by further using the unnecessary information-distinguishing threshold pixel value according to which unnecessary information is removed. The unnecessary information removal section 7 outputs the captured image processed as above to the feature quantity extraction section 8.

The feature quantity extraction section 8 receives the captured image from the unnecessary information removal section 7 and then extracts a feature quantity, indicating a feature of the pointing member (edge feature quantity), from pixels in the captured image by performing edge detection, and then outputs the feature quantity thus extracted and positional information (coordinates) for the pixels (a feature region) showing the feature quantity to the touch position detection section 9 (S19).

The touch position detection section 9 receives the feature quantity and the positional information for the feature region and then calculates a touch position by performing pattern matching on the feature region (S20). The touch position detection section 9 then outputs the coordinates representing the touch position thus calculated to the application execution section 21.

In a case where the image adjusting section 2 stores the adjusted captured image in the memory storage section 40, the external light intensity calculation section 3 can obtain the captured image from the memory storage section 40.

Embodiment 2

The following will describe another embodiment of the present invention in reference to Figs. 25 to 27. The same members as those of Embodiment 1 are indicated by the same reference numerals and descriptions thereof are omitted.

(Arrangement of Touch Position Detection Device 50)

Fig. 25 is a block diagram illustrating a touch position detection device 50 of the present embodiment. As illustrated in Fig. 25, the touch position detection device 50 differs from the touch position detection device 1 in that the former includes an image analyzing section 20a having a feature quantity extraction section (feature region extraction means) 31 and an unnecessary information removal section (removing means) 32 instead of the image analyzing section 20 having the feature quantity extraction section 8 and the unnecessary information removal section 7.

The feature quantity extraction section 31 extracts a feature quantity indicating a feature of a figure of the pointing member in the captured image (the infrared light image or the visible light image) adjusted by the image adjusting section 2, and then outputs the feature quantity to the unnecessary information removal section 32. In a case of the reflected light recognition mode, the feature quantity extraction section 31 deals with an infrared light image. In a case of the shadow recognition mode, the feature quantity extraction section 31 deals with a visible light image. The feature quantity extraction section 31 carries out the same process as does the feature quantity extraction section 8. The only difference between the process of the feature quantity extraction section 31 and the process of the feature quantity extraction section 8 is the targets to be processed and where to output the feature quantity.

The unnecessary information removal section 32 removes at least part of the feature quantity extracted by the feature quantity extraction section 31 according to the estimated value of the external light intensity calculated by the external light intensity calculation section 3. To describe it in more detail, the unnecessary information removal section 32 removes, in the case of the shadow recognition mode, the feature quantity (feature region) which is attributed to the pixels each having a pixel value greater than the in-touch/non-touch distinguishing threshold pixel value calculated by the in-touch/non-touch distinguishing threshold pixel value calculation section 6. In the case of the reflected light recognition mode, the unnecessary information removal section 32 removes the feature quantity (feature region) which is attributed to the pixels each having a pixel value smaller than the in-touch/non-touch distinguishing threshold pixel value calculated by the in-touch/non-touch distinguishing threshold pixel value calculation section 6. Removing the feature quantity associated with pixels is equivalent to removing information on the feature region (pixels exhibiting the feature quantity); therefore, the removal of the feature quantity and the removal of the feature region have substantially the same meaning.

Information of the feature quantity is associated with each pixel of the captured image, and for example, is generated as a feature quantity table which is apart from the captured image. The removal of the feature quantity as above can be performed by removing, from the feature quantity table, a feature quantity which is attributed to pixels to be removed.

In the case of the shadow recognition mode, the unnecessary information removal section 32 may remove the feature quantity which is attributed to the pixels each having a pixel value smaller than the unnecessary information-distinguishing threshold pixel value according to which unnecessary information is removed calculated by the in-touch/non-touch distinguishing threshold pixel value calculation section 6. In the case of the reflected light recognition mode, the unnecessary information removal section 32 may remove the feature quantity which is attributed to the pixels each having a pixel value greater than the unnecessary information-distinguishing threshold pixel value according to which unnecessary information is removed. That is, the unnecessary information removal section 32 may be arranged such that it removes a feature quantity, which is extracted from pixels, of the captured image, each having a pixel value deviating from a predetermined range defined by a predetermined upper limit and a predetermined lower limit.

That is, the in-touch/non-touch distinguishing threshold pixel value calculation section 6 may be arranged such that it calculates an upper limit and a lower limit of pixel values for determining whether or not the feature quantity extracted by the feature quantity extraction section 31 is attributed to a figure of a part, of the target subject, which is in contact with the light sensor-containing LCD 11. Then, the unnecessary information removal section 32 may remove a feature quantity corresponding to pixels each having a pixel value greater than the upper limit and a feature quantity corresponding to pixels each having a pixel value smaller than the lower limit.

The touch position detection section 9 identifies a touch position (a position of a figure of the target subject) by using the feature quantity, from which noise has been removed by the unnecessary information removal section 32.

Note that, it can be described that the in-touch/non-touch distinguishing threshold pixel value calculation section 6 calculates a reference value of pixel values according to the estimated value calculated by the external light intensity calculation section 3, and the reference value is used to determine whether or not the feature quantity extracted by the feature quantity extraction section 31 is attributed to the figure of a contact part of the target subject, wherein the contact part is a part of the target subject at which the target subject is in contact with the image capture screen of the light sensor-containing LCD 11. Further, it can be described that the touch position detection section 9 calculates a position of the figure of the contact part of the target subject (i.e., calculates a position of the feature region in the captured image) according to the feature quantity which has not been removed by the unnecessary information removal section 7, wherein the contact part is a part of the target subject at which the target subject is in contact with the image capture screen.

Fig. 26 is a table for explaining the removal of unnecessary information performed by the unnecessary information removal section 32 in the case of the shadow recognition mode. As illustrated in Fig. 26, in the case of the shadow recognition mode, the feature quantity of the figure (pixels each having a pixel value greater than the in-touch/non-touch distinguishing threshold pixel value) of the pointing member not in contact with the light sensor-containing LCD 11 contained in the sensor image of non-touch finger pad is removed by the unnecessary information removal section 32. Therefore, the feature quantity (cyclic region) in the image under "Before Removing Unnecessary Part" in Fig. 26 is removed from the sensor image of the non-touch finger pad and is not removed from the sensor image of the in-touch finger pad.

The touch position detection device 1 of Embodiment 1 extracts a feature quantity after the relationship between the background pixel values and the pixel values below the finger pad is changed (after the differences between the background pixel values and the pixel values below the finger pad are narrowed). Therefore, a threshold for the extraction of an edge feature quantity needs to be changed (made less imposing) so as to extract the feature quantity from the captured image from which unnecessary parts have been removed.

Meanwhile, in a case where the feature quantity corresponding to pixels each having a pixel value greater than the in-touch/non-touch distinguishing threshold pixel value is removed after the feature quantity is extracted as in the case of the touch position detection device 50 of the present embodiment, the parameter upon the feature quantity extraction does not need to be altered. This scheme is thus more effective.

For these reasons, the present embodiment employs a noise remove process using the in-touch/non-touch distinguishing threshold pixel value, which is performed after the feature quantity is extracted from the captured image.

(Flow of Process performed by Touch Position Detection Device 50)

Next, the description is given for an example of a flow of touch position detection performed by the touch position detection device 50 in reference to Fig. 27. Fig. 27 is a flowchart depicting an exemplary touch position detection performed by the touch position detection device 50. Steps S21 to S26 shown in Fig. 27 are identical with steps S11 to S16 shown in Fig. 24.

In step S27, the in-touch/non-touch distinguishing threshold pixel value calculation section 6 outputs the calculated in-touch/non-touch distinguishing threshold pixel value and the unnecessary information-distinguishing threshold pixel value according to which unnecessary information is removed to the unnecessary information removal section 32.

In step S28, the feature quantity extraction section 31 extracts a feature quantity indicating a feature of a figure of the pointing member in the captured image corresponding to the recognition mode selected by the recognition process selecting section 5, which captured image is selected from the captured images outputted from the image adjusting section 2. Then, the feature quantity extraction section 31 outputs, to the unnecessary information removal section 32, (i) the captured image and (ii) the feature region data including the feature quantity thus extracted and position information for pixels showing the feature quantity.

The unnecessary information removal section 32 receives the in-touch/non-touch distinguishing threshold pixel value and the unnecessary information-distinguishing threshold pixel value according to which unnecessary information is removed from the in-touch/non-touch distinguishing threshold pixel value calculation section 6 and receives the captured image and the feature region data from the feature quantity extraction section 31. Then, the unnecessary information removal section 32 performs removal of the feature quantity which is attributed to the pixels each having a pixel value greater than the in-touch/non-touch distinguishing threshold pixel value in the case of the shadow recognition mode (S29). More specifically, the unnecessary information removal section 32 obtains pixel values, for the pixels (feature region) in the captured image, which are associated with the feature quantity indicated by the feature region data. Then, if the pixel values are greater than the in-touch/non-touch distinguishing threshold pixel value, the unnecessary information removal section 32 removes the feature quantity of the pixels from the feature region data. The unnecessary information removal section 32 performs this process for each of the pixels (feature region) in the captured image. The unnecessary information removal section 32 outputs the feature region data thus processed to the touch position detection section 9.

The touch position detection section 9 receives the feature region data processed by the unnecessary information removal section 32, and then calculates a touch position (a position of the figure of the pointing member in the captured image) by performing pattern matching on the feature region indicated by the feature region data (S30). The touch position detection section 9 then outputs the coordinates representing the touch position thus calculated to the application execution section 21.

Note that, in the case of the reflected light recognition mode, the unnecessary information removal section 32 removes the feature quantity which is attributed to pixels each having a pixel value smaller than the in-touch/non-touch distinguishing threshold pixel value in step S29. More specifically, the unnecessary information removal section 32 obtains pixel values for pixels (feature region) in the captured image which pixel values are associated with the feature quantity indicated by the feature region data. Then, if the pixel values are smaller than the in-touch/non-touch distinguishing threshold pixel value, the unnecessary information removal section 32 removes the feature quantity of the pixels from the feature region data.

Further, in step S29, in the case of the shadow recognition mode, the unnecessary information removal section 32 can obtain pixel values for pixels (feature region) in the captured image which pixel values are associated with the feature quantity indicated by the feature region data. Then, if the pixel values are smaller than the unnecessary information-distinguishing threshold pixel value according to which unnecessary information is removed, the unnecessary information removal section 32 removes the feature quantity of the pixels from the feature region data. Likewise, in step S29, in the case of the reflected light recognition mode, the unnecessary information removal section 32 can obtain pixel values for pixels (feature region) in the captured image which pixel values are associated with the feature quantity indicated by the feature region data. Then, if the pixel values are greater than the unnecessary information-distinguishing threshold pixel value according to which unnecessary information is removed, the unnecessary information removal section 32 removes the feature quantity of the pixels from the feature region data.

(Variations)

The present invention is not limited to the description of the embodiments above, but may be altered by a skilled person within the scope of the claims. An embodiment based on a proper combination of technical means disclosed in different embodiments is encompassed in the technical scope of the present invention.

The various blocks in the touch position detection device 1 and the touch position detection device 50, especially the image analyzing section 20 and the image analyzing section 20a, can be implemented by hardware or software executed by a CPU as follows.

Namely, the touch position detection device 1 and the touch position detection device 50 each include a CPU (central processing unit) and memory devices (storage media). The CPU executes instructions contained in control programs, realizing various functions. The memory devices may be a ROM (read-only memory) containing programs, a RAM (random access memory) to which the programs are loaded, or a memory containing the programs and various data. The objectives of the present invention can be achieved also by mounting to the touch position detection device 1 or 50 a computer-readable storage medium containing control program code (executable programs, intermediate code programs, or source programs) for control programs (image analysis programs) for the touch position detection device 1 or 50, which control programs are software implementing the aforementioned functions, in order for a computer (or CPU, MPU) of the touch position detection device 1 or 50 to retrieve and execute the program code contained in the storage medium.

The storage medium can be, for example, a tape, such as a magnetic tape or a cassette tape; a magnetic disk, such as a floppy® disk or a hard disk, or an optical disc, such as a CD-ROM/MO/MD/DVD/CD-R; a card, such as an IC card (memory card) or an optical card; or a semiconductor memory, such as a mask ROM/EPROM/EEPROM/flash ROM.

The touch position detection device 1 and the touch position detection device 50 can be arranged to be connectable to a communications network so that the program code is delivered over the communications network. The communications network is not limited in any particular manner, and can be, for example, the Internet, an intranet, extranet, LAN, ISDN, VAN, CATV communications network, virtual dedicated network (virtual private network), telephone line network, mobile communications network, or satellite communications network. The transfer medium which makes up the communications network is not limited in any particular manner, and can be, for example, a wired line, such as IEEE 1394, USB, an electric power line, a cable TV line, a telephone line, or an ADSL; or wireless, such as infrared (IrDA, remote control), Bluetooth®, 802.11 wireless, HDR (high data rate), a mobile telephone network, a satellite line, or a terrestrial digital network. The present invention encompasses a carrier wave, or data signal transmission, in which the program code is embodied electronically.

As so far described, the position detection device of the present invention is preferably arranged such that the first light sensors are infrared light sensors sensitive mainly to infrared light, and the estimated value calculation means calculates the estimated value according to an amount of light received by the first light sensors.

According to the arrangement, the estimated value calculation means calculates the estimated value according to the amount of light received by the first light sensors. In a case of carrying out a position detection under dim ambient light in a room or in the open air by making use of infrared light emitted from a backlight and reflected by the target subject (i.e., in a case of carrying out a position detection in the reflected light recognition mode), the position detection is less likely to be affected by external light because the dim ambient light such as dim fluorescent light or dim sunlight includes little infrared light. However, as the external light intensity of the infrared light increases, contrast between the figure of the target subject and the background area becomes lower. This results in the figure of the target subject being unrecognizable. Under the circumstances, it is preferable to detect the external light intensity of the infrared light so that the reflected light recognition mode is switched to the shadow recognition mode (i.e., a mode of recognizing a shadow of the target subject) before the figure of the target subject becomes unrecognizable. To this end, it is preferable to estimate the external light intensity of the infrared light in advance.

Also in the shadow recognition mode, the following problem arises. The infrared light more likely passes through a finger or the like than the visible light. Therefore, brightness of the figure of the target subject is affected by the infrared light transmitted the figure or the like, in a case where the position detection is carried out by capturing the shadow of the target subject under an environment where there is a lot of infrared light, such as under the bright external light. This is because the visible light sensors that are sensitive mainly to visible light are more or less sensitive also to infrared light, thereby increasing the pixel values. Under the circumstances, it is possible to improve recognition precision by accurately knowing the external light intensity of the infrared light so as to estimate the brightness (pixel value) of the shadow of the target subject and then using the estimated brightness in the recognition process.

The position detection device is preferably arranged such that the second light sensors are visible light sensors sensitive mainly to visible light.

According to the arrangement, the position detection device includes the infrared light sensors and the visible light sensors, which are sensitive to light of respective different wavelengths. Accordingly, the position detection device is capable of appropriately detecting a position of the figure of the target subject under a broad range of ambient light intensities, as compared to a position detection device including only one type of light sensor.

It is preferable that the position detection device further include an infrared light source which emits infrared light toward the target subject.

According to the arrangement, infrared light is emitted toward the target subject. As such, the position detection device is capable of capturing the figure of the target subject by detecting infrared light reflected by the target subject.

The position detection device is preferably arranged such that the estimated value calculation means calculates the estimated value from a pixel value of a pixel being ranked at a predetermined place among at least some of pixels in the image captured by the first light sensors, which some of pixels are placed in a descending order.

The estimated value of external light intensity is preferably calculated from a group of pixels having a relatively high pixel values among the pixels in the captured image. However, employing the highest pixel value as the estimated value of the external light intensity will allow the position detection device to be prone to noise or the like. This increases the likelihood of deterioration in accuracy of calculation of the estimated value of the external light intensity.

According to the above arrangement, the estimated value calculation means selects at least some of pixels from a plurality of pixels in the captured image, and then arranges the pixels thus selected so that pixel values thereof are placed in the descending order. The estimated value calculation means then calculates the estimated value of the external light intensity from a pixel value of a pixel being ranked at a predetermined place from the top (for example, a 10th pixel).

As such, it possible to appropriately calculate the estimated value of the external light intensity by appropriately setting the predetermined place.

The position detection device further includes: switching means for switching, according to the estimated value calculated by the estimated value calculation means, between a first detecting method and a second detecting method, the first detecting method detecting a position of the figure of the target subject by analyzing an image obtained by capturing a light figure being made by light emitted toward the target subject and reflected by the target subject, the second detecting method detecting a position of the figure of the target subject by analyzing an image obtained by capturing a shadow being made by the target subject shutting out external light that otherwise enters the plurality of light sensors, each of the first detecting method and second detecting method having a predetermined place corresponding thereto as the predetermined place in the descending order, and the estimated value calculation means calculating the estimated value by using the predetermined place corresponding to the first detecting method or to the second detecting method, which is selected by the switching means.

According to the arrangement, the switching means switches, according to the estimated value of the external light intensity calculated by the estimated value calculation means, between the first detecting method and the second detecting method. Meanwhile, the estimated value calculation means calculates the estimated value from the predetermined place corresponding to the first detecting method or to the second detecting method, which is selected by the switching means.

As such, the position detection device is capable of calculating the estimated value of the external light intensity, which is suitable for the detecting method of the figure of the target subject.

It is preferable that the position detection device further include: switching means for switching over between a first detecting method and a second detecting method according to the estimated value calculated by the estimated value calculation means, the first detecting method detecting a position of the figure of the target subject by analyzing an image obtained by capturing a light figure being made by light emitted toward the target subject and reflected by the target subject, and the second detecting method detecting a position of the figure of the target subject by analyzing an image obtained by capturing a shadow being made by the target subject shutting out external light that enters the plurality of light sensors.

According to the arrangement, the switching means switches, according to the estimated value of the external light intensity calculated by the estimated value calculation means, between the first detecting method and the second detecting method. The first detecting method detects a position of the figure of the target subject by analyzing the image containing the light figure made of light emitted toward the target subject and reflected by the target subject. Therefore, the first detecting method cannot detect the figure of the target subject under a condition where external light is equal to or greater than that of the light reflected by the target subject.

Under the circumstances, the position detection device is capable of selecting an appropriate image capturing method suitable for the external light intensity, by the switching means switching between the first detecting method and the second detecting method according to the estimated value of the external light intensity.

It is preferable that the position detection device further include: an infrared light source which emits infrared light toward the target subject, the first light sensors being infrared light sensors sensitive mainly to infrared light, and the switching means (i) turning on the infrared light source in selecting the first detecting method and (ii) turning off the infrared light source in selecting the second detecting method.

According to the arrangement, the switching means turns on the infrared light source so that infrared light is emitted by the infrared light source, in a case of detecting the figure of the target subject by the first detecting method. This makes it possible to irradiate the target subject with the infrared light, thereby obtaining the infrared light reflected by the target subject. On the other hand, the switching means turns off the infrared light source, in a case of detecting the figure of the target subject by the second detecting method. According to the second detecting method, there is no need for the infrared light source to emit the infrared light because the figure of the target subject is detected by analyzing the captured image including the shadow of the target subject.

The target subject is recognizable even in a case where the infrared light source is in an ON state. However, if the infrared light source is in the ON state, then the shadow of the target subject is brightened. The shadow thus brightened is thrown into the background area and becomes unrecognizable, in a case where the external light intensity is low. As a result, the figure of the target subject is recognizable under a narrower range of external light intensities. For this reason, the infrared light source is preferably in an OFF state in the case of the second detecting method in which the shadow of the target subject is recognized.

According to the above arrangement, it is possible to appropriately control, depending on the method of detecting the target subject, whether to turn on or off the infrared light source.

The position detection device is preferably arranged such that the estimated value has (i) a reference level, at which the second detecting method is switched to the first detecting method, and (ii) another reference level, at which the first detecting method is switched to the second detecting method, the reference level and the another reference level being different from each other.

The arrangement makes it possible to prevent frequent switching between the first detecting method and the second detecting method, which switching is caused by quick change in the estimated value of the external light intensity.

It is preferable that the position detection device further include: feature quantity extraction means for extracting, from the captured image, a feature quantity indicating a feature of the figure of the target subject; reference value calculation means for calculating a reference value of a pixel value from the estimated value calculated by the estimated value calculation means, wherein the reference value is a reference value for determining whether the feature quantity extracted by the feature quantity extraction means is attributed to a figure of a contact part of the target subject, wherein the contact part is a part of the target subject which part is in contact with the image capture screen; removing means for removing, according to the reference value calculated by the reference value calculation means, at least part of the feature quantity extracted by the feature quantity extraction means; and position calculation means for calculating, from the feature quantity not removed by the removing means, the position of the figure of the contact part of the target subject.

According to the arrangement, the feature quantity extraction means extracts the feature quantity indicating the feature of the figure of the target subject in the image captured. The reference value calculation means calculates, from the estimated value of the external light intensity, the reference value of the pixel value according to which to determine whether the feature quantity extracted by the feature quantity extraction means is attributed to the figure of the part, of the target subject, which is in contact with the image capture screen. The removing means removes, according to the reference value of the pixel value, at least part of the feature quantity extracted by the feature quantity extraction means. The position calculation means calculates, from the feature quantity not removed by the removing means, the position of the figure of the part, of the target subject, which is in contact with the image capture screen.

As such, the arrangement makes it possible to remove the feature quantity of the pointing member, which feature quantity is attributed to the figure of the pointing member not in contact with the image capture screen and is not necessary for recognition of the pointing member. Accordingly, it is possible to improve precision in recognizing the pointing member.

The position detection device is preferably arranged such that the reference value calculation means calculates an upper limit of the pixel value, which upper limit serves as the reference value, and the removing means removes a feature quantity corresponding to a pixel having a pixel value greater than the upper limit calculated by the reference value calculation means.

According to the arrangement, the feature quantity extracted from the pixel having the pixel value greater than the upper limit is removed. Accordingly, it is possible to remove the feature quantity extracted from the pixel having a high pixel value, which is not necessary for detection of the figure of the target subject.

The position detection device is preferably arranged such that the reference value calculation means calculates a lower limit of the pixel value, which lower limit serves as the reference value, and the removing means removes a feature quantity corresponding to a pixel having a pixel value smaller than the lower limit calculated by the reference value calculation means.

According to the arrangement, the feature quantity extracted from the pixel having the pixel value smaller than the lower limit is removed. Accordingly, it is possible to remove the feature quantity extracted from the pixel having a small pixel value, which is not necessary for detection of the figure of the target subject.

The position detection device is preferably arranged such that the reference value calculation means calculates an upper limit of the pixel value, which upper limit serves as the reference value, and a lower limit of the pixel value, which lower limit serves as another reference value, and the removing means removes (i) a feature quantity corresponding to a pixel having a pixel value greater than the upper limit calculated by the reference value calculation means and (ii) a feature quantity corresponding to a pixel having a pixel value smaller than the lower limit calculated by the reference value calculation means.

According to the arrangement, (i) the feature quantity extracted from the pixel having the pixel value greater than the upper limit and (ii) the feature quantity extracted from the pixel having the pixel value smaller than the lower limit are removed. As such, it is possible to remove the feature quantity extracted from the pixel having a pixel value, which is not necessary for detection of the figure of the target subject.

It is preferable that the position detection device further include: reference value calculation means for calculating, from the estimated value calculated by the estimated value calculation means, a reference value of a pixel value according to which reference value to remove a figure other than a figure of a part, of the target subject, which is in contact with the image capture screen from the imaged captured; and image processing means for altering pixel values for some of pixels in the image captured, according to the reference value calculated by the reference value calculation means.

According to the arrangement, the reference value calculation means calculates, from the estimated value of the external light intensity, the reference value of the pixel value according to which to remove the figure (information not necessary for recognition of the target subject) other than the figure of the part, of the target subject, which is in contact with the image capture screen from the image captured. On the other hand, the image processing means alters the pixel values for some of the pixels in the image captured, according to the reference value of the pixel value calculated by the reference value calculation means, so that the information not necessary for recognition of the target subject is removed from the image captured. For example, the image processing means replaces a pixel value greater than the upper limit with the reference value of the pixel value.

Accordingly, it is possible to remove the information not necessary for recognition of the target subject from the image captured, thereby improving precision of recognition of the target subject.

The position detection device is preferably arranged such that the reference value calculation means calculates an upper limit of the pixel value, which upper limit serves as the reference value, and the image processing means alters a pixel value greater than the upper limit calculated by the reference value calculation means.

According to the arrangement, the pixel value, of each pixel in the image captured, which is greater than the upper limit, is altered. For example, the pixel value greater than the upper limit can be altered to the upper limit, and alternatively, the pixel value greater than the upper limit can be altered to a maximum pixel value so that the pixel value greater than the upper limit saturates. Accordingly, it is possible to remove a figure having a high pixel value, which is not necessary for recognition of the figure of the target subject.

The position detection device is preferably arranged such that the reference value calculation means calculates a lower limit of the pixel value, which lower limit serves as the reference value, and the image processing means alters a pixel value smaller than the lower limit calculated by the reference value calculation means.

According to the arrangement, the pixel value, of each pixel in the image captured, which is smaller than the lower limit, is altered. For example, the pixel value smaller than the lower limit can be altered to the lower limit, and alternatively, the pixel value smaller than the lower limit can be altered to a minimum value so that the pixel value smaller than the lower limit saturates. Accordingly, it is possible to remove a figure having a small pixel value, which is not necessary for recognition of the figure of the target subject.

The position detection device is preferably arranged such that the reference value calculation means calculates an upper limit of the pixel value, which upper limit serves as the reference value, and a lower limit of the pixel value, which lower limit serves as another reference value, and the image processing means alters (i) a pixel value greater than the upper limit calculated by the reference value calculation means and (ii) a pixel value smaller than the lower limit calculated by the reference value calculation means.

According to the arrangement, (i) the pixel value, of each pixel in the image captured, which is greater than the upper limit and (ii) the pixel value, of each pixel in the image captured, which is smaller than the lower limit, are altered. Accordingly, it is possible to remove a figure having a pixel value not necessary for recognition of the figure of the target subject.

The position detection device is preferably arranged such that the reference value calculation means calculates the reference value by selectively using at least one of a plurality of predetermined equations according to the estimated value calculated by the estimated value calculation means.

The arrangement makes it possible to calculate the reference value of the pixel value suitable for the external light intensity, according to the estimated value estimated in consideration of the change in the external light intensity. For example, the reference value calculation means can calculate the reference value of the pixel value by using a first equation in a case where the external light intensity (or the estimated value of the external light intensity) is in a first range and by a second equation in a case where the external light intensity is in a second range.

It is preferable that the position detection device further includes: switching means for switching over between a first detecting method and a second detecting method according to the estimated value calculated by the estimated value calculation means, the first detecting method detecting a position of the figure of the target subject by analyzing an image obtained by capturing a light figure being made by light emitted toward the target subject and reflected by the target subject, the second detecting method detecting a position of the figure of the target subject by analyzing an image obtained by capturing a shadow being made by the target subject shutting out external light that enters the plurality of light sensors, and the reference value calculation means calculating the reference value by selectively using at least one of a plurality of predetermined equations according to the first detecting method or to the second detecting method, which is selected by the switching means.

The reference value according to which information not necessary for recognition of the target subject is removed may differ between the first detecting method and the second detecting method. The arrangement makes it possible to calculate a preferable reference value for the first detecting method or for the second detecting method, which is selected by the switching means.

It is preferable that the position detection device further include sensitivity adjusting means for adjusting a sensitivity of the first light sensors according to the estimated value calculated by the estimated value calculated means.

The arrangement makes it possible to capture an image at sensitivity suitable for the changing external light intensity.

The position detection device is preferably arranged such that the sensitivity adjusting means adjusts the sensitivity of the first light sensors in stages and when the estimated value is equal to or smaller than a predetermined reference level, increases the sensitivity of the first light sensors by two or more stages at once.

According to the arrangement, when the estimated value is equal to or less than the predetermined reference level, the sensitivity adjusting means increases the sensitivity of the first sensors by two or more stages at once. Accordingly, the sensitivity is suitably adjusted more quickly than when it is gradually increased.

The position detection device is preferably arranged such that the sensitivity adjusting means adjusts the sensitivity of the first light sensors so that the estimated value calculated by the estimated value calculation means does not saturate.

If the estimated value of the external light intensity saturates, then the figure of the target subject is recognized with dramatically reduced precision. It should be noted here that the phrase "external light intensity saturates" means the external light intensity is outside a range of light intensities that can be detected by the first light sensors. If the external light intensity saturates, then the estimated value calculated from the external light intensity also saturates.

According to the arrangement, an image is captured at such a sensitivity that the estimated value of the external light intensity does not saturate. As such, an image appropriate for recognition of the target subject can be captured.

It is preferable that the position detection device further include sensitivity adjusting means for adjusting a sensitivity of the first light sensors according to the estimated value calculated by the estimated value calculated means, the sensitivity adjusting means adjusting the sensitivity of the first light sensors so that the reference value calculated by the reference value calculation means does not saturate.

According to the arrangement, the sensitivity adjusting means adjusts the sensitivity of the first light sensors so that the reference value calculated by the reference value calculation means does not saturate. If the reference value calculated by the reference value calculation means saturates due to an increase in the external light intensity, then (i) the figure, of the target subject, which is in contact with the image capture screen and (ii) the figure, of the target subject, which is not in contact with the image capture screen, cannot be accurately distinguished from each other.

Under the circumstances, the arrangement makes it possible to recognize the figure, of the target subject, which is in contact with the image capture screen, with improved precision.

The position detection device is preferably arranged such that the sensitivity adjusting means (i) decreases the sensitivity of the first light sensors from a first sensitivity to a second sensitivity when the estimated value reaches a first reference level under a condition where the sensitivity is set to the first sensitivity, the second sensitivity being lower than the first sensitivity and (ii) increases the sensitivity of the first light sensors from the second sensitivity to the first sensitivity when the estimated value decreases to a second reference level under a condition where the sensitivity is set to the second sensitivity, and the second reference level is lower than external light intensity, to which the first reference level corresponds and which is detected by one or more of the light sensors which is/are adjusted to have the second sensitivity.

The first reference level is a reference level of external light intensity at which the sensitivity of the first light sensors which is set to the first sensitivity is reduced to the second sensitivity, whereas the second reference level is a reference level of an estimated level of external light intensity at which the sensitivity of the first light sensors which is set to the second sensitivity is increased to the first sensitivity. According to the arrangement, the second reference level is lower than the estimated value of the external light intensity, which corresponds to the first reference level and is detected by the first light sensors whose sensitivity is set to the second sensitivity.

This lowers the likelihood that when the sensitivity of the first light sensors decreases from the first sensitivity to the second sensitivity, the estimated value calculated by the estimated value calculation means quickly reaches the second reference level, and the sensitivity of the first light sensors switches back to the first sensitivity. The arrangement thus prevents small changes in the external light intensity from causing frequent switching of the sensitivity of the first light sensors from the first sensitivity to the second sensitivity or from the second sensitivity to the first sensitivity.

Further, (i) a control program which causes the position detection device to operate and causes a computer to function as the above means and (ii) a computer-readable storage medium on which the control program are stored are also encompassed in the scope of the present invention.

[Industrial Applicability]

The present invention makes it possible to appropriately detect a position of a figure of a target subject under a broad range of ambient light intensities, so that the present invention is applicable to a position detection device, an input device, and the like, each of which includes a touch panel.

[Explanation of Referential Numerals]

| | |
|---|---|
| 1 | Touch Position Detection Device (Position Detection Device) |
| 3 | External Light Intensity Calculation Section (Estimated Value Calculation Means) |
| 4 | Optimal Sensitivity Calculation Section (Sensitivity Adjusting Means) |
| 5 | Recognition Process Selecting Section (Switching Means) |
| 6 | In-touch/non-touch Distinguishing Threshold Pixel Value Calculation Section (Reference Value Calculation Means) |
| 7 | Unnecessary Information Removal Section (Image Processing Means) |
| 8 | Feature Quantity Extraction Section (Feature Quantity Extraction Means) |
| 9 | Touch Position Detection Section (Position Calculation Means) |
| 11 | Light sensor-containing LCD (Image Capture Screen) |
| 12 | Infrared Light Sensor (First Light Sensor) |
| 13 | Visible Light Sensor (Second Light Sensor) |
| 17 | Backlight (Infrared Light Source) |
| 31 | Feature Quantity Extraction Section (Feature Quantity Extraction Means) |
| 32 | Unnecessary Information Removal Section (Removing Means) |
| 50 | Touch Position Detection Device (Position Detection Device) |

**Claims**

1. A position detection device which detects a position of a figure of a target subject by (i) capturing, with a plurality of light sensors included in an image capture screen (11), an image of the target subject being placed near or in contact with the image capture screen (11), and (ii) analyzing the captured image so as to detect the position of the figure of the target subject in the image captured, the position detection device being **characterized by** comprising:

> first light sensors (12) and second light sensors (13) being sensitive to light of respective different wavelengths, each of the first light sensors (12) and second light sensors (13) being one of the plurality of light sensors; and
> estimated value calculation means (3) for calculating, with use of the image captured by the first light sensors, an estimated value serving as an index of external light intensity, which is an intensity of light in the surroundings of the target subject.

2. The position detection device according to claim 1, wherein:

> the first light sensors (12) are infrared light sensors sensitive mainly to infrared light, and
> the estimated value calculation means (3) calculates the estimated value according to an amount of light received by the first light sensors (12).

3. The position detection device according to claim 2, wherein the second light sensors (13) are visible light sensors sensitive mainly to visible light.

4. The position detection device according to claim 2 or 3, further comprising an infrared light source (17) which emits infrared light toward the target subject.

5. The position detection device according to any one of claims 1 through 4, wherein:

> the estimated value calculation means (3) calculates the estimated value from a pixel value of a pixel being ranked at a predetermined place among at least some of pixels in the image captured by the first light sensors (12), which some of pixels are placed in a descending order.

6. The position detection device according to claim 5, further comprising:

> switching means (5) for switching, according to the estimated value calculated by the estimated value calculation means (3), between a first detecting method and a second detecting method, the first detecting method detecting a position of the figure of the target subject by analyzing an image obtained by capturing a light figure being made by light emitted toward the target subject and reflected by the target subject,
the second detecting method detecting a position of the figure of the target subject by analyzing an image obtained by capturing a shadow being made by the target subject shutting out external light that otherwise enters the plurality of light sensors,
each of the first detecting method and second detecting method having a predetermined place corresponding thereto as the predetermined place in the descending order, and
the estimated value calculation means (3) calculating the estimated value by using the predetermined place corresponding to the first detecting method or to the second detecting method, which is selected by the switching means (5).

7. The position detection device according to any one of claims 1 through 5, further comprising:

> switching means (5) for switching over between a first detecting method and a second detecting method according to the estimated value calculated by the estimated value calculation means (3),
> the first detecting method detecting a position of the figure of the target subject by analyzing an image obtained by capturing a light figure being made by light emitted toward the target subject and reflected by the target subject, and
> the second detecting method detecting a position of the figure of the target subject by analyzing an image obtained by capturing a shadow being made by the target subject shutting out external light that enters the plurality of light sensors.

8. The position detection device according to claim 7, further comprising:

> an infrared light source (17) which emits infrared light toward the target subject,
> the first light sensors (12) being infrared light sensors sensitive mainly to infrared light, and
> the switching means (5) (i) turning on the infrared light source (17) in selecting the first detecting method and (ii) turning off the infrared light source (17) in selecting the second detecting method.

9. The position detection device according to any one of claims 1 through 8, further comprising:

> feature quantity extraction means (8) for extracting, from the captured image, a feature quantity indicating a feature of the figure of the target subject;
> reference value calculation means (6) for calculating a reference value of a pixel value from the estimated value calculated by the estimated value calculation means (3), wherein the reference value is a reference value for determining whether the feature quantity extracted by the feature quantity extraction means (8) is attributed to a figure of a contact part of the target subject, wherein the contact part is a part of the target subject which part is in contact with the image capture screen (11);
removing means (32) for removing, according to the reference value calculated by the reference value calculation means (6), at least part of the feature quantity extracted by the feature quantity extraction means (8); and
position calculation means (9) for calculating, from the feature quantity not removed by the removing means (32), the position of the figure of the part contact part of the target subject.

10. The position detection device according to claim 9, wherein:

the reference value calculation means (6) calculates an upper limit of the pixel value, which upper limit serves as the reference value, and the removing means (32) removes a feature quantity corresponding to a pixel having a pixel value greater than the upper limit calculated by the reference value calculation means (6).

11. The position detection device according to claim 9, wherein:

the reference value calculation means (6) calculates a lower limit of the pixel value, which lower limit serves as the reference value, and the removing means (32) removes a feature quantity corresponding to a pixel having a pixel value smaller than the lower limit calculated by the reference value calculation means (6).

12. The position detection device according to claim 9, wherein:

the reference value calculation means (6) calculates an upper limit of the pixel value, which upper limit serves as the reference value, and a lower limit of the pixel value, which lower limit serves as another reference value, and the removing means (32) removes (i) a feature quantity corresponding to a pixel having a pixel value greater than the upper limit calculated by the reference value calculation means (6) and (ii) a feature quantity corresponding to a pixel having a pixel value smaller than the lower limit calculated by the reference value calculation means (6).

13. The position detection device according to any one of claims 1 through 12, further comprising:

sensitivity adjusting means (4) for adjusting a sensitivity of the first light sensors (12) according to the estimated value calculated by the estimated value calculation means (3).

14. The position detection device according to claim 13, wherein the sensitivity adjusting means (4) adjusts the sensitivity of the first light sensors (12) so that the estimated value calculated by the estimated value calculation means (3) does not saturate.

15. The position detection device according to any one of claims 9 through 12, further comprising:

sensitivity adjusting means (4) for adjusting a sensitivity of the first light sensors (12) according to the estimated value calculated by the estimated value calculated means (3), the sensitivity adjusting means (4) adjusting the sensitivity of the first light sensors (12) so that the reference value calculated by the reference value calculation means (6) does not saturate.

# FIG. 1

```
                                                                    ┌─10
┌────────────────────────────────────────────────────────────────────────┐
│ 11┐                                              TOUCH PANEL SECTION      │
│ ┌──────────────────────────────────────────────────────────────────┐   │
│ │ LIGHT SENSOR-CONTAINING LCD                                        │   │
│ │        ┌──────────┐ ┌12      ┌──────────┐ ┌13                      │   │
│ │        │ INFRARED LIGHT│      │ VISIBLE LIGHT│                      │   │
│ │        │   SENSOR     │      │    SENSOR    │                       │   │
│ │        └──────────┘        └──────────┘                            │   │
│ └──────────────────────────────────────────────────────────────────┘   │
│        ┌──────────┐ ┌14   ┌──────────┐ ┌15   ┌──────────┐ ┌16         │
│        │    AD    │      │ BACKLIGHT │      │ SENSITIVITY│            │
│        │ CONVERTER │      │CONTROL SECTION│  │ADJUSTING SECTION│       │
│        └──────────┘      └──────────┘      └──────────┘              │
└────────────────────────────────────────────────────────────────────────┘
```

INFRARED LIGHT SENSOR 12

VISIBLE LIGHT SENSOR 13

AD CONVERTER 14

BACKLIGHT CONTROL SECTION 15

SENSITIVITY ADJUSTING SECTION 16

MEMORY STORAGE SECTION 40

IMAGE ADJUSTING SECTION 2

EXTERNAL LIGHT INTENSITY CALCULATION SECTION 3

OPTIMAL SENSITIVITY CALCULATION SECTION 4

RECOGNITION PROCESS SELECTING SECTION 5

IN-TOUCH/NON-TOUCH DISTINGUISHING THRESHOLD PIXEL VALUE CALCULATION SECTION 6

UNNECESSARY INFORMATION REMOVAL SECTION 7

FEATURE QUANTITY EXTRACTION SECTION 8

TOUCH POSITION DETECTION SECTION 9

IMAGE ANALYZING SECTION 20

APPLICATION EXECUTION SECTION 21

1

# FIG. 2

(a)

52
53
12
51

(b)

52
53
13
51

# FIG. 3

## FIG. 4

(a)

| A | B | A | B | A | B | A | B | A | B |
|---|---|---|---|---|---|---|---|---|---|
| A | B | A | B | A | B | A | B | A | B |
| A | B | A | B | A | B | A | B | A | B |
| A | B | A | B | A | B | A | B | A | B |
| A | B | A | B | A | B | A | B | A | B |
| A | B | A | B | A | B | A | B | A | B |
| A | B | A | B | A | B | A | B | A | B |
| A | B | A | B | A | B | A | B | A | B |

(b)

| A | B | A | B | A | B | A | B | A | B |
|---|---|---|---|---|---|---|---|---|---|
| B | A | B | A | B | A | B | A | B | A |
| A | B | A | B | A | B | A | B | A | B |
| B | A | B | A | B | A | B | A | B | A |
| A | B | A | B | A | B | A | B | A | B |
| B | A | B | A | B | A | B | A | B | A |
| A | B | A | B | A | B | A | B | A | B |
| B | A | B | A | B | A | B | A | B | A |

# FIG. 5

(a)

| | | | |
|---|---|---|---|
| A | B | A | B |
| B | A | B | A |
| A | B | A | B |
| B | A | B | A |

Create Histogram from
Image Captured with
Infrared Light Sensors

(b)

Number of Pixels          Histogram

Sensor Image (1)

Sensor Image (2)

Sensor Image (3)

Pixel Value

0          A     B     C     255

## FIG. 6

Number of Pixels          Histogram

Sensor Image (1) ⇒

Sensor Image (2) ⇒

Pixel
Value

0                                   255

| External Light Intensity calcutated from Top 50% | External Light Intensity calculated from Top 5% |

## FIG. 7

73

71                                                        72

76

74                                                        75

# FIG. 8

START

S1
External light
intensity < threshold
value?

NO

YES

S2
Turn ON
infrared light backlight

S5
Turn OFF
infrared light backlight

S3
Change to parameters
for infrared light image

S6
Change to parameters
for visible light image

S4
Select recognition process
that uses infrared light image

S7
Select recognition process
that uses visible light image

END

## FIG. 9

(a)

Visible Light    Infrared Light          Visible Light    Infrared Light

~60

Light Sensor-containing LCD

Visible Light    Infrared Light    ~11

Backlight (Infrared Light Backlight: ON, Visible Light Backlight: ON)    ~17

(b)

Visible Light    Infrared Light          Visible Light    Infrared Light

~60

Light Sensor-containing LCD

Visible Light    ~11

Backlight (Infrared Light Backlight: OFF, Visible Light Backlight: ON)    ~17

## FIG. 10

| Reflected Light Recognition ◀️ | | Shadow Recognition |
|---|---|---|

| Reflected Light Recognition | ▶️ | Shadow Recognition |
|---|---|---|

External Light Intensity

Low                                                                        High

| Switching Point to Reflected Light Recognition<br>Reflected Light Intensity ≒ External Light Intensity | Switching Point to Shadow Recognition<br>Reflected Light Intensity ≒ External Light Intensity |
|---|---|

## FIG. 11

(a)

NO LIGHT

(b)

(c)

FLUORESCENT LIGHT

(d)

(e)

INCANDESCENT LAMP

(f)

(g)

SUNLIGHT

(h)

# FIG. 12

(a) NO LIGHT

(b)

(c) FLUORESCENT LIGHT

(d)

(e) INCANDESCENT LAMP

(f)

(g) SUNLIGHT

(h)

# FIG. 13

Condition (1)
Nothing Placed

Condition (2)
Non-touch Finger

Condition (3)
In-touch Finger

~81

~82

~81

~60

~60

| Light Sensor-containing LCD | ~11 |
| Backlight (Infrared Light Backlight: ON, Visible Light Backlight: ON) | ~17 |

Sensor Images

83

84

# FIG. 14

Condition (1)
Nothing Placed

Condition (2)
Non-touch Finger

Condition (3)
In-touch Finger

~81

~82

~81

~60

~60

| Light Sensor-containing LCD | ~11 |
| Backlight (Infrared Light Backlight: OFF, Visible Light Backlight: ON) | ~17 |

Sensor Images

85

86

# FIG. 15

(a)

Pixel Value
(Large)

91
92
93

0 → External Light Intensity
(High)

(b)

| | Low → External Light Intensity → High | | |
|---|---|---|---|
| (1) Sensor Image of Background Only | | | |
| (2) Sensor Image of Non-touch Finger Pad | | | |
| (3) Sensor Image of In-touch Finger Pad | | | |

Low ☐ External Light Intensity ⇒ High

# FIG. 16

(a) Pixel Value (Large)

103
101
104
102

0    External Light Intensity (High)

(b) Pixel Value (Large)

103
101
104
102

0    External Light Intensity (High)

(c) Pixel Value (Large)

103
101
104
102

0    Branch Point    External Light Intensity (High)

(d) Pixel Value (Large)

103
101
104
102

0    Branch Point    External Light Intensity (High)

# FIG. 17

(a)

Pixel Value
(Large)

94
95
96

0
External Light Intensity
(High)

(b)

| | | | |
|---|---|---|---|
| (1) Sensor Image of Background Only | | | |
| (2) Sensor Image of Non-touch Finger Pad | | | |
| (3) Sensor Image of In-touch Finger Pad | | | |

Low ⟶ External Light Intensity ⟶ High

## FIG. 18

(a) Pixel Value (Large) / External Light Intensity (High)
111, 113, 112, 114

(b) Pixel Value (Large) / External Light Intensity (High)
111, 113, 112, 114

(c) Pixel Value (Large) / Branch Point / External Light Intensity (High)
111, 113, 112, 114

(d) Pixel Value (Large) / Branch Point / External Light Intensity (High)
111, 113, 112, 114

# FIG. 19

| | Before Removing Unnecessary Part | After Removing Unnecessary Part |
|---|---|---|
| Sensor Image of Non-touch Finger Pad | | |
| Sensor Image of In-touch Finger Pad | | |
| Pixel Values for Background and Finger Pad | Pixel Value — Finger Pad — Background | Pixel Value — Finger Pad — Background |

# FIG. 20

(a)

Sensitivity
Switching Point

Pixel Value
(Large)

Saturated
Pixel Value ---------------------------- 121

123

122

0                                    Ambient Light Intensity
(High)

In-touch/non-touch
distinguishing threshold
pixel value is accurately
calculated

In-touch/non-touch distinguishing
threshold pixel value is NOT
accurately calculated due to
saturated external light intensity

(b)

Pixel Value
(Large)

Saturated
Pixel Value ---------------------------- 121

122

0                                    Ambient Light Intensity
(High)

# FIG. 21

(a)

Pixel Value
(Large)

Sensitivity
Switching Point

133

Saturated
Pixel Value — — — — — — — — — — — 132

131

0

Ambient Light Intensity
(High)

| In-touch/non-touch distinguishing threshold pixel value is accurately calculated | Shadow is unrecognizable due to saturated in-touch/non-touch distinguishing threshold pixel value |

(b)

Pixel Value
(Large)

Saturated
Pixel Value — — — — — — — — — — — 132

131

0

Ambient Light Intensity
(High)

# FIG. 22

Dark ⟹ Bright

| | | | |
|---|---|---|---|
| (1)<br>Without<br>Sensitivity<br>Switching | <br>Sensitivity:1/1 | <br>Sensitivity:1/1 | <br>Sensitivity:1/1 |
| (2)<br>With Sensitivity<br>Switching | <br>Sensitivity:1/1 | <br>Sensitivity:1/2 | <br>Sensitivity:1/4 |

# FIG. 23

## FIG. 24

```
                    ( START )
                        |
                +---------------+  ┌S11
                | Capture image |
                +---------------+
                        |
             +--------------------+  ┌S12
             | Adjust captured image |
             +--------------------+
                        |
             +--------------------+  ┌S13
             |  Calculate external |
             |    light intensity  |
             +--------------------+
                        |
                       / \            ┌S14
                      /   \
                     /Switch\          NO
                    < over      >---------+
                     \recognition/        |
                      \ mode? /           |
                       \ /                |
                      YES                 |
                        |                 |
           +----------------------+  ┌S15 |
           | Switch over recognition mode | |
           +----------------------+        |
                        |                 |
                        |<----------------+
                        |
           +----------------------+  ┌S16
           | Calculate optimal sensitivity |
           +----------------------+
                        |
      +------------------------------+  ┌S17
      |   Calculate in-touch/non-touch  |
      | distinguishing threshold pixel value |
      +------------------------------+
                        |
          +----------------------+  ┌S18
          | Remove unnecessary information |
          +----------------------+
                        |
          +----------------------+  ┌S19
          |  Extract feature quantity |
          +----------------------+
                        |
          +----------------------+  ┌S20
          |   Detect touch position  |
          +----------------------+
                        |
                    ( END )
```

# FIG. 25

TOUCH PANEL SECTION — 10

LIGHT SENSOR-CONTAINING LCD — 11

INFRARED LIGHT SENSOR — 12

VISIBLE LIGHT SENSOR — 13

AD CONVERTER — 14

BACKLIGHT CONTROL SECTION — 15

SENSITIVITY ADJUSTING SECTION — 16

MEMORY STORAGE SECTION — 40

IMAGE ADJUSTING SECTION — 2

EXTERNAL LIGHT INTENSITY CALCULATION SECTION — 3

OPTIMAL SENSITIVITY CALCULATION SECTION — 4

RECOGNITION PROCESS SELECTING SECTION — 5

IN-TOUCH/NON-TOUCH DISTINGUISHING THRESHOLD PIXEL VALUE CALCULATION SECTION — 6

FEATURE QUANTITY EXTRACTION SECTION — 31

UNNECESSARY INFORMATION REMOVAL SECTION — 32

TOUCH POSITION DETECTION SECTION — 9

IMAGE ANALYZING SECTION — 20a

APPLICATION EXECUTION SECTION — 21

50

## FIG. 26

| | Before Removing Unnecessary Part | After Removing Unnecessary Part |
|---|---|---|
| Sensor Image of Non-touch Finger Pad | | |
| Sensor Image of In-touch Finger Pad | | |

# FIG. 27

START

Capture image — S21

Adjust captured — S22

Calculate external light intensity — S23

Switch over recognition mode? — S24

NO

YES

Switch over recognition mode — S25

Calculate optimal sensitivity — S26

Calculate in-touch/non-touch distinguishing threshold pixel value — S27

Extract feature quantity — S28

Remove unnecessary information — S29

Detect touch position — S30

END

**EP 2 226 710 A2**

**REFERENCES CITED IN THE DESCRIPTION**

**Patent documents cited in the description**

- JP 2006018219 A

- JP 2008250949 A